# EUROPEAN PATENT APPLICATION

(11) **EP 1 818 937 A1**
(43) Date of publication of application: **15.08.2007**
(21) Application number: 07002839.4
(22) Date of filing: 09.02.2007
(51) Int. Cl.: G11B 27/32, G11B 27/034, G11B 27/10, G11B 27/34

(54) **Recording apparatus, recording method, program for recording method, recording medium recording program for recording method, reproducing apparatus, reproduction method, program for reproduction method, and recording medium recording program for reproduction method**

(30) Priority: 10.02.2006 JP 2006033212; 18.08.2006 JP 2006222869
(71) Applicant: Sony Corporation, Minato-ku Tokyo 108-0075 (JP)
(72) Inventor: Date, Osamu, Tokyo, 108-0075 (JP); Ishizaka, Toshihiro, Tokyo, 108-0075 (JP); Hirabayashi, Mitsuhiro, Tokyo, 108-0075 (JP); Tsujii, Satoshi, Tokyo, 108-0075 (JP)
(74) Representative: Müller - Hoffmann & Partner

(57) **Abstract**

A recording apparatus includes a moving-picture recording control device configured to record a moving picture as a moving picture file into a recording medium, a representative image creating device configured to create a representative image representing a predetermined group of frame images forming the moving picture, and a representative-image recording control device configured to record the representative image as a representative image file into the recording medium.

## Description

### CROSS REFERENCES TO RELATED APPLICATIONS

The present invention contains subject matter related to Japanese Patent Application JP 2006-033212 filed in the Japanese Patent Office on February 10, 2006, and Japanese Patent Application JP 2006-222869 filed in the Japanese Patent Office on August 18, 2006, the entire contents of which are incorporated herein by reference.

### BACKGROUND OF THE INVENTION

### 1. Field of the Invention

The present invention relates to a recording medium, a recording method, a program for a recording method, a recording medium recording a program for a recording method, a reproducing apparatus, a reproduction method, a program for a reproduction method, and a recording medium recording a program for a reproduction method. The present invention is applicable to, for example, a video camera. According to the present invention, representative images are stored in a representative image storing section, and information indicating that stored information is control information for the representative images, information indicating the modification date and time of a moving picture file, and control information with one representative image set as the minimum reproduction unit, are stored hierarchically in order into a control information storing section, thereby enhancing the ease of random access when reproducing a representative image, and further making it possible to easily and reliably detect a mismatch between the moving picture file and the representative image.

### 2. Description of the Related Art

Recent years have seen dramatic increases in the recording capacity of recording/reproducing apparatus such as a hard disk recorder. This allows the user to record a larger number of moving picture files of longer duration without frequent exchange of the recording medium than in the past.

When viewing and listening to a moving picture file recorded with such a recording/reproducing apparatus, some user may want to check only a portion of the moving picture file. Further, the user may sometimes want to start viewing and listening from only the most interesting parts of the moving file. In such a case, if the moving picture file is reproduced sequentially from the leading end of the file, the operation becomes cumbersome, making it difficult to readily and quickly view and listen to a desired scene.

In view of this, Japanese Unexamined Patent Application Publication No. 2004-260452 proposes a method in which at the time of recording a moving picture file, chapters are set at a fixed time interval and representative images are recorded, and when the user selects a representative image, random access is performed using the chapter corresponding to this selected representative image. It should be noted here that a representative image refers to an image representing a predetermined group of frame images constituting a moving picture. For example, a thumbnail image is employed as the representative image.

However, as the recording time of a moving picture increases, the number of chapters to be set and the number of representative images also increase accordingly, which makes it difficult to display in list form a plurality of representative images created from one moving picture file. Accordingly, in this case, it is necessary to perform switching between the representative images displayed in list form, in response to an operation of the user. That is, for instance, when a list display of representative images set on the leading end side of a file is designated by the user, it is necessary to switch the list display by detecting the representative images on the leading end side of the file from among the representative images being currently displayed. Conversely, when a list display of representative images set on the tail end side of a file is designated by the user, it is necessary to switch the list display by detecting the representative images on the tail end side of the file from among the representative images being currently displayed.

Accordingly, in the case of the recording/reproducing apparatus of this type, it is desired that the representative image at the location designated by the user can be readily and quickly reproduced from the recording medium, and that the ease of random access when reproducing a representative image from the recording medium be enhanced. However, in the case where representative images are managed on the basis of chapters, the ease of random access deteriorates as the number of representative images increases.

Further, such a moving picture file is often edited by the user, in which case the consistency between the representative image and the moving picture file is jeopardized. Specifically, for example, if the user deletes a part of the moving picture file, random access using chapters cannot be performed with respect to this deleted part despite the presence of a representative image. Accordingly, it is desirable to eliminate the occurrence of such a mismatch. To this end, it is desirable to easily and reliably detect the occurrence of such a mismatch.

### SUMMARY OF THE INVENTION

In view of the above-mentioned problems, it is desirable to provide a recording apparatus, a recording method, a program for a recording method, a recording medium recording a program for a recording method, a reproducing apparatus, a reproduction method, a program for a reproduction method, and a recording medium recording a program for a reproduction method, which allow random access using a representative image to thereby enhance the ease of random access when reproducing the representative image from a recording medium, and which further makes it possible to easily and reliably detect a mismatch between a moving picture file and a representative image.

According to an embodiment of the present invention, there is provided a recording apparatus including: moving-picture recording control means for recording a moving picture as a moving picture file into a recording medium; representative image creating means for creating a representative image representing a predetermined group of frame images forming the moving picture; and representative-image recording control means for recording the representative image as a representative image file into the recording medium, wherein the representative-image recording control means creates the representative image file according to a file structure having a representative image storing section that stores the representative image, and a control information storing section that stores control information hierarchically in accordance with the kind of the control information, the control information being used for controlling reproduction of the representative image stored in the representative image storing section, stores, at a first layer of the control information storing section, information indicating that information stored in the control information storing section is control information for controlling the representative image, stores, at a second layer lower than the first layer, information indicating modification date and time of the moving picture file, and stores, at a third layer lower than the second layer, the control information for performing reproduction control with the representative image as a minimum reproduction unit.

Further, according to another embodiment of the present invention, there is provided a recording method including: a moving-picture recording control step of recording a moving picture as a moving picture file into a recording medium; a representative image creating step of creating a representative image representing a predetermined group of frame images forming the moving picture; and a representative-image recording control step of recording the representative image as a representative image file into the recording medium, wherein the representative-image recording control step includes creating the representative image file according to a file structure having a representative image storing section that stores the representative image, and a control information storing section that stores control information hierarchically in accordance with the kind of the control information, the control information being used for controlling reproduction of the representative image stored in the representative image storing section, storing, at a first layer of the control information storing section, information indicating that information stored in the control information storing section is control information for controlling the representative image, storing, at a second layer lower than the first layer, information indicating modification date and time of the moving picture file, and storing, at a third layer lower than the second layer, the control information for performing reproduction control with the representative image as a minimum reproduction unit.

Further, according to another embodiment of the present invention, there is provided a program for a recording method in which a moving picture is recorded into a recording medium by execution of computing means, including:
a moving-picture recording control step of recording the moving picture as a moving picture file into the recording medium; a representative image creating step of creating a representative image representing a predetermined group of frame images forming the moving picture; and a
representative-image recording control step of recording the representative image as a representative image file into the recording medium, wherein the representative-image recording control step includes creating the representative image file according to a file structure having a representative image storing section that stores the representative image, and a control information storing section that stores control information hierarchically in accordance with the kind of the control information, the control information being used for controlling reproduction of the representative image stored in the representative image storing section, storing, at a first layer of the control information storing section, information indicating that information stored in the control information storing section is control information for controlling the representative image, storing, at a second layer lower than the first layer, information indicating modification date and time of the moving picture file, and storing, at a third layer lower than the second layer, the control information for performing reproduction control with the representative image as a minimum
reproduction unit.

Further, according to another embodiment of the present invention, there is provided a recording medium recording a program for a recording method in which a moving picture is recorded into the recording medium by execution of computing means, the program for the recording method including: a moving-picture recording control step of recording the moving picture as a moving picture file into the recording medium; a representative image creating step of creating a representative image representing a predetermined group of frame images forming the moving picture; and a representative-image recording control step of recording the representative image as a representative image file into the recording medium, wherein the representative-image recording control step includes creating the representative image file according to a file structure having a representative image storing section that stores the representative image, and a control information storing section that stores control information hierarchically in accordance with the kind of the control information, the control information being used for controlling reproduction of the representative image stored in the representative image storing section, storing, at a first layer of the control information storing section, information indicating that information stored in the control information storing section is control information for controlling the representative image, storing, at a second layer lower than the first layer, information indicating modification date and time of the moving picture file, and storing, at a third layer lower than the second layer, the control information for performing reproduction control with the representative image as a minimum reproduction unit.

According to the embodiments of the present invention as described above, on the basis of the control information for representative images, the representative images can be reproduced one by one to secure the ease of random access. Further, on the basis of the information for specifying a moving picture, corresponding frame images can be reproduced from the representative image selected by the user, thereby allowing random access using the representative image. Further, a mismatch between the moving picture file and the representative image file can be easily and reliably detected through the evaluation of the information indicating the modification date and time of the moving picture file. Accordingly, it is possible to secure the ease of random access when reproducing a representative image from a recording medium by enabling random access using the representative image, and further easily and reliably detect a mismatch between the moving picture file and the representative image.

Further, according to another embodiment of the present invention, there is provided a reproducing apparatus which reproduces a moving picture file and a representative image file that are recorded in a recording medium, wherein the representative image file includes a representative image storing section that stores a representative image representing a predetermined group of frame images forming the moving picture file, and a control information storing section that stores control information hierarchically in accordance with the kind of the control information, the control information being used for controlling reproduction of the representative image stored in the representative image storing section, stores, at a first layer of the control information storing section, information indicating that information stored in the control information storing section is control information for controlling the representative image, stores, at a second layer lower than the first layer, information indicating modification date and time of the moving picture file, and stores, at a third layer lower than the second layer, the control information for performing reproduction control with the representative image as a minimum reproduction unit, wherein the reproducing apparatus includes a data reproducing section that reproduces the moving picture file and the representative image file recorded in the recording medium, a display section that displays a moving picture of the moving picture file and a representative image of the representative image file reproduced by the data reproducing section, and a control section that controls display of the display section by processing data reproduced by the data reproducing section, and wherein the control section displays in list form on the display section a plurality of the representative images recorded in the recording medium, on the basis of control information for the representative image, and switches between the representative images displayed in list form in response to an operation of a user, accepts a selection of a representative image from among the representative images displayed in list form, and displays on the display section the frame images corresponding to the selected representative image, on the basis of control information for the representative image.

Further, according to another embodiment of the present invention, there is provided a reproduction method for reproducing a moving picture file and a representative image file that are recorded in a recording medium, wherein the representative image file includes a representative image storing section that stores a representative image representing a predetermined group of frame images forming the moving picture file, and a control information storing section that stores control information hierarchically in accordance with the kind of the control information, the control information being used for controlling reproduction of the representative image stored in the representative image storing section, stores, at a first layer of the control information storing section, information indicating that information stored in the control information storing section is control information for controlling the representative image, stores, at a second layer lower than the first layer, information indicating modification date and time of the moving picture file, and stores, at a third layer lower than the second layer, the control information for performing reproduction control with the representative image as a minimum reproduction unit, wherein the reproduction method includes a data reproducing step of reproducing the moving picture file and the representative image file recorded in the recording medium, a displaying step of displaying a moving picture of the moving picture file and a representative image of the representative image file reproduced by the data reproducing step, and a controlling step of controlling display in the displaying step by processing data reproduced by the data reproducing step, and wherein the controlling step includes displaying in list form in the displaying step a plurality of the representative images recorded in the recording medium, on the basis of control information for the representative image, and switches between the representative images displayed in list form in response to an operation of a user, accepting a selection of a representative image from among the representative images displayed in list form, and displaying in the displaying step the frame images corresponding to the selected representative image, on the basis of control information for the representative image.

Further, according to another embodiment of the present invention, there is provided a program for a reproduction method in which a moving picture file and a representative image file that are recorded in a recording medium are reproduced by execution of computing means, wherein the representative image file includes a representative image storing section that stores a representative image representing a predetermined group of frame images forming the moving picture file, and a control information storing section that stores control information hierarchically in accordance with the kind of the control information, the control information being used for controlling reproduction of the representative image stored in the representative image storing section, stores, at a first layer of the control information storing section, information indicating that information stored in the control information storing section is control information for controlling the representative image, stores, at a second layer lower than the first layer, information indicating modification date and time of the moving picture file, and stores, at a third layer lower than the second layer, the control information for performing reproduction control with the representative image as a minimum reproduction unit, wherein the reproduction method includes a data reproducing step of reproducing the moving picture file and the representative image file recorded in the recording medium, a displaying step of displaying a moving picture of the moving picture file and a representative image of the representative image file reproduced by the data reproducing step, and a controlling step of controlling display in the displaying step by processing data reproduced by the data reproducing step, and wherein the controlling step includes displaying in list form in the displaying step a plurality of the representative images recorded in the recording medium, on the basis of control information for the representative image, and switches between the representative images displayed in list form in response to an operation of a user, accepting a selection of a representative image from among the representative images displayed in list form, and displaying in the displaying step the frame images corresponding to the selected representative image, on the basis of control information for the representative image.

Further, according to another embodiment of the present invention, there is provided a recording medium recording a program for a reproduction method in which a moving picture file and a representative image file that are recorded in the recording medium are reproduced by execution of computing means, wherein the representative image file includes a representative image storing section that stores a representative image representing a predetermined group of frame images forming the moving picture file, and a control information storing section that stores control information hierarchically in accordance with the kind of the control information, the control information being used for controlling reproduction of the representative image stored in the representative image storing section, stores, at a first layer of the control information storing section, information indicating that information stored in the control information storing section is control information for controlling the representative image, stores, at a second layer lower than the first layer, information indicating modification date and time of the moving picture file, and stores, at a third layer lower than the second layer, the control information for performing reproduction control with the representative image as a minimum reproduction unit, wherein the reproduction method includes a data reproducing step of reproducing the moving picture file and the representative image file recorded in the recording medium, a displaying step of displaying a moving picture of the moving picture file and a representative image of the representative image file reproduced by the data reproducing step, and a controlling step of controlling display in the displaying step by processing data reproduced by the data reproducing step, and wherein the controlling step includes displaying in list form in the displaying step a plurality of the representative images recorded in the recording medium, on the basis of control information for the representative image, and switches between the representative images displayed in list form in response to an operation of a user, accepting a selection of a representative image from among the representative images displayed in list form, and displaying in the displaying step the frame images corresponding to the selected representative image, on the basis of control information for the representative image.

According to the embodiments of the present invention as described above, it is possible to secure the ease of random access when reproducing a representative image from a recording medium so that random access can be achieved by using the representative image, and it is also possible to allow random access to a moving picture to be performed using a representative image from a recording medium recording the representative image so that a mismatch between the moving picture file and the representative image can be easily and reliably detected.

According to the present invention, a moving picture file is recorded in such a way as to allow random access using a representative image, thereby making it possible to secure the ease of random access when reproducing a representative image from a recording medium, and further easily and reliably detect a mismatch between the moving picture file and the representative image.

### BRIEF DESCRIPTION OF THE DRAWINGS

Fig. 1 is a chart showing an AV file applied to a video camera according to Embodiment 1 of the present invention;
Fig. 2 is a block diagram showing the video camera according to Embodiment 1 of the present invention;
Fig. 3 is a chart showing the AV file shown in Fig. 1 in more detail;
Fig. 4 is a chart showing the relation between the AV file shown in Fig. 2 and a meta information file;
Fig. 5 is a chart showing a meta information file according to the video camera shown in Fig. 2;
Fig. 6 is a chart showing a user meta data box in the meta information file shown in Fig. 5;
Fig. 7 is a time chart illustrating representative images in the AV file shown in Fig. 3;
Fig. 8 is a plan view illustrating film roll reproduction;
Fig. 9 is a flowchart showing the procedure of processing performed by a central processing unit at the time of starting reproduction or the like;
Fig. 10 is a chart showing an AV file applied to a video camera according to Embodiment 2 of the present invention;
Fig. 11 is a chart showing the relation between a video track box and a motion thumbnail track in the AV file shown in Fig. 10;
Fig. 12 is a chart showing a user meta data box in the AV file shown in Fig. 10;
Figs. 13A and 13B are time charts illustrating representative images in the AV file shown in Fig. 10;
Fig. 14 is a flowchart showing the procedure of processing performed by a central processing unit of a video camera according to Embodiment 4 of the present invention;
Figs. 15A to 15C are schematic diagrams illustrating representative images in a video camera according to Embodiment 5 of the present invention;
Figs. 16A and 16B are schematic diagrams illustrating how representative images are processed in a video camera according to Embodiment 6 of the present invention;
Fig. 17 is a schematic diagram showing film roll reproduction using the representative images shown in Figs. 16A and 16B;
Figs. 18A and 18B are schematic diagrams illustrating edit processing using the representative images shown in Figs. 16A and 16B; and
Figs. 19A and 19B are schematic diagrams showing processing in the case where the corresponding picture is in an open GOP.

### DESCRIPTION OF THE PREFERRED EMBODIMENTS

Embodiments of the present invention will be described in detail below while referring to the drawings as appropriate.

### Embodiment 1

### (1) Configuration of Embodiment

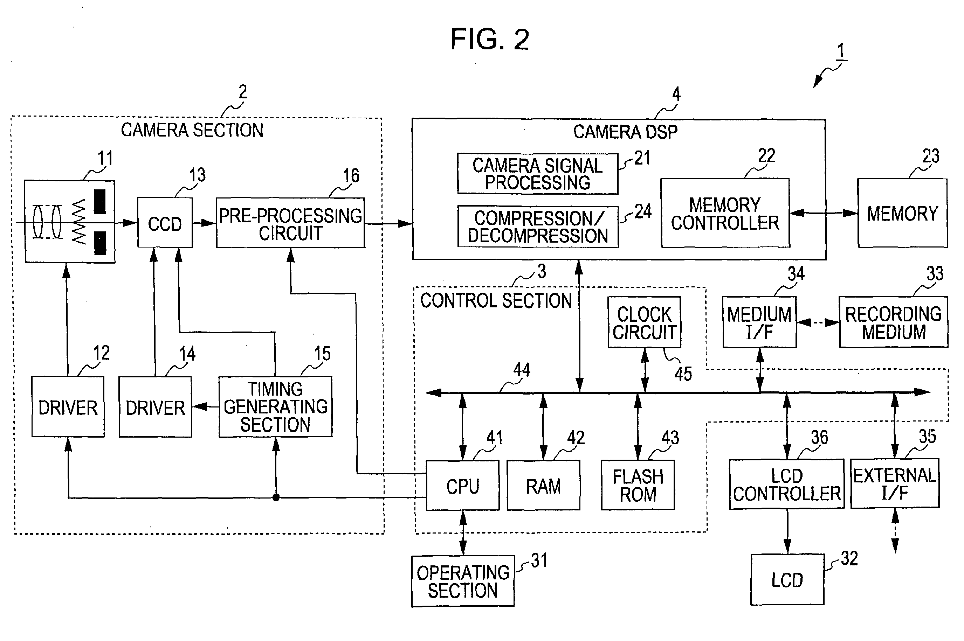

Fig. 2 is a block diagram showing a video camera according to an embodiment of the present invention. It should be noted that although a video camera 1 according to this embodiment includes an audio data processing system provided in correspondence with a video data processing system, this audio data processing system is omitted in Fig. 2. In the video camera 1, a camera section 2 acquires an imaging result as a moving picture in accordance with the control of a control section 3, and outputs the image data of the imaging result to a camera DSP (Digital Signature Processor).

That is, in the camera section 2, an optical block 11 condenses incident light by making the diaphragm, zoom magnification, focus, and the like variable through the drive of an optical block driver (driver) 12, thereby forming the optical image of a subject on the imaging surface of a CCD (Charge Coupled Device) solid imaging device (CCD) 13 located succeeding to the optical block 11. The optical block driver 12 drives the optical block 11 in accordance with the control of the control section 3.

The CCD solid imaging device 13 performs photoelectric conversion on the optical image formed on the imaging surface through the drive of a CCD driver (driver) 14, and outputs the imaging result based on the photoelectric conversion result. The CCD driver 14 drives the CCD solid imaging device 13 in accordance with the control of the control section 3, and a timing generating circuit 15 generates and outputs various timing signals necessary for the operations of the CCD solid imaging device 13 and CCD driver 14.

A pre-processing section 16 subjects the output signal of the CCD solid imaging device 13 to CDS (Correlated Double Sampling) and AGC (Automatic Gain Control), followed by analog/digital conversion to create image data. The camera section 2 outputs this image data to the camera DSP 4.

The camera DSP 4, which switches its operation in accordance with the control of the control section 3, performs processing on the image data outputted from the camera section 2 to create video data, and further creates video data for monitor and outputs it to the control section 3. Further, the camera DSP 4 performs data compression on this video data to create streaming data for recording, and outputs this streaming data to the control section 3. At the time of reproduction, the camera DSP 4 performs data decompression on the streaming data outputted from the control section 3 to create video data, and outputs the video data for monitor to the control section 3.

That is, in the camera DSP 4, a camera signal processing section 21 performs matrix operation on image data outputted from the camera section 2 to create video data, and acquires information necessary for AF (Auto Focus) and AE (Auto Exposure) from this video data and outputs the information to the control section 3. Further, this video data is subjected to AWB (Auto White Balance) adjustment, gamma correction, knee processing, and the like. The camera DSP 4 creates video data for monitor by lowering the resolution of the video data processed in the camera signal processing section 21, and outputs this video data for monitor to the control section 3.

A memory controller 22 sequentially records the video data processed in the camera signal processing section 21 into a memory 23, and reads the video data recorded in the memory 23 and outputs the video data to a compression/decompression section 24. Further, the memory controller 22 temporarily stores the streaming data outputted from the control section 3 into the memory 23 and outputs the streaming data to the compression/decompression section 24. Herein, the memory 23 is, for example, an SDRAM (Synchronous Dynamic Random Access Memory).

In accordance with the format of MPEG (Moving Picture Experts Group)-4AVC (Advanced Video Coding), the compression/decompression section 24 performs data compression on the video data outputted from the memory 23, and outputs this streaming data to the control section 3. Further, at the time of reproduction, the compression/decompression section 24 performs data decompression on the streaming data inputted via the memory 23 to create video data. At the time of reproduction, the camera DSP 4 creates video data for monitor on the basis of the video data obtained by the data decompression, and outputs the video data for monitor to the control section 3.

Further, at the time of generating streaming data, the compression/decompression section 24 creates thumbnail image data by lowering the resolution of video data set as an I picture, and outputs this thumbnail image data as representative image data to the control section 3. Accordingly, in this embodiment, for each plurality of pictures constituting one GOP (Group of Pictures), a representative image is created from one of these plurality of pictures. It should be noted that one representative image may not necessarily be created by one GOP, and one representative image may be formed by a plurality of GOPs. Further, in the case where one representative image is formed by a plurality of GOPs, it is also possible for one representative image to be created by any one of the plurality of GOPs. For example, one representative image may be created by one GOP selected randomly from the plurality of GOPs. In this way, representative image data is created while generating streaming data in this embodiment. Alternatively, representative image data may be created automatically or by the designation of the user after recording of streaming data is completed. Further, instead of an I picture, a representative image may be created from a P picture or a B picture by generating streaming data with a so-called closed GOP that does not reference a picture in another GOP.

The control section 3 controls the operations of respective sections in response to an operation on an operating portion 31 formed by a touch panel, control key, or the like provided in the video camera 1, and displays the video data for monitor outputted from the camera DSP 4 on an LCD (Liquid Crystal Display) 32. Further, the control section 3 records the streaming data outputted from the camera DSP 4 into a recording medium 33, and reproduces the streaming data recorded in the recording medium 33 and outputs the streaming data to the camera DSP 4.

That is, in the control section 3, a clock circuit 45 notifies a central processing unit (CPU) 41 of the time information based on the current date and time.

The central processing unit 41 secures a work area within a RAM (Random Access Memory) 42 and executes a processing program stored in a flash ROM (Read Only Memory) 43, thereby controlling the operations of respective sections in response to an operation on the operating portion 31. It should be noted that in this embodiment, the processing program of the central processing unit 41 is provided by being installed into the video camera 1 in advance. However, alternatively, the processing program may be provided by being recorded into various kinds of recording medium such as a magnetic disc and a memory card, or may be provided by being downloaded via a network such as the Internet.

Through the control of the respective sections as described above, the central processing unit 41 acquires an imaging result by the camera section 2, and inputs the video data of the imaging result from the camera DSP 4 to an internal buss 44. Further, the central processing unit 41 outputs to an LCD controller 36 the video data inputted to the internal bus 44, and displays the monitor image of the imaging result through the drive of the LCD 32 by the LCD controller 36. Further, on the basis of the information necessary for auto focus and auto exposure outputted from the camera DSP 4 at this time, the central processing unit 41 controls the operation of the camera section 2, thereby executing the processing of auto focus and auto exposure.

When the user designates the recording of the imaging result in this state, streaming data is created by the camera DSP 4, and this streaming data is inputted to the internal bus 44. Further, this streaming data is outputted to a medium interface 34, thereby recording the imaging result into the recording medium 33. It should be noted that while various kinds of recording medium such as a so-called memory card using a semiconductor memory, an optical disc such as a recordable DVD (Digital Versatile Disk) or a recordable CD (Compact Disc), and a magnetic disc can be employed in this embodiment, the memory card is employed in this embodiment.

When the user designates the outputting of the imaging result to an external apparatus instead of the recording of the imaging result into the recording medium 33, the streaming data outputted from the camera DSP4 is outputted to an external interface (external I/F) 35, thereby outputting the imaging result to an external apparatus connected to the external interface 35. It should be noted that examples of the external apparatus in this case include a personal computer and a communication module, and examples of the external interface 35 that can be employed include a wired interface such as IEEE (Institute of Electrical and Electronics Engineers) 1394 or USB (Universal Serial Bus), and an optical or radio-based wireless interface.

On the other hand, when the user designates reproduction, the streaming data recorded in the recording medium 33 is reproduced and outputted to the camera DSP 4, and this streaming data is subjected to data decompression in the camera DSP 4 to create video data. Further, video data for monitor based on this video data is inputted from the camera DSP 4 and displayed on the LCD 32, thereby displaying the monitor image of the imaging result recorded in the recording medium 33. Further, when the outputting of the imaging result reproduced in this way to an external apparatus is designated, the data reproduced from the recording medium 33 is outputted to the external apparatus via the external interface 35, or the video data that has been subjected to data decompression in the camera DSP 4 is outputted to the external apparatus via the external interface 35.

When the inputting of a moving picture file from an external apparatus is designated by the user, streaming data is acquired via the external interface 35, and this streaming data is outputted to the camera DSP 4 to create video data. Further, video data for monitor based on this video data is inputted from the camera DSP 4 and displayed on the LCD 32, thereby displaying the monitor image of the moving picture file inputted from the external apparatus. Further, when the monitor image is displayed in this way and the recording thereof into the recording medium 33 is designated by the user, the streaming data inputted via the external interface 35 is outputted to the medium interface 34, thereby recording this streaming data into the recording medium 33.

In the series of processing described above, the central processing unit 41 creates image data for displaying in list form thumbnail images that will be described later, image data for various menu screens, and the like as appropriate and outputs them to the LCD controller 36, thereby displaying these menu screens, thumbnail image list display screens, and the like. Further, a user's operation is accepted on the basis of a selecting operation by the user in this display.

When the streaming data from the camera DSP 4 is inputted for output to the medium interface 34 or the external interface 35, the central processing unit 41 stores the representative image data created by the compression/decompression section 24 into the RAM 42 to temporarily hold the image data. When the outputting of the streaming data is completed, the temporarily held representative image data is subsequently outputted. The central processing unit 41 thus causes the streaming data and the representative image data to be recorded, or to be outputted to an external apparatus.

The central processing unit 41 causes streaming data and representative image data to be recorded or outputted in this way, and applies the file format in conformity with ISO/IEC 14496 to the files of these data. Accordingly, when recording streaming data, the central processing unit 41 acquires reproduction time information, meta information, and the like of a representative image necessary for the creation of a file conforming to this format and holds these information in the RAM 41, and stores these information into a motion thumbnail track box or the like that will be described later. It should be noted that in the following description, a moving picture file based on streaming data is referred to as the AV file, and a representative image file having the motion thumbnail track box is referred to as the meta information file.

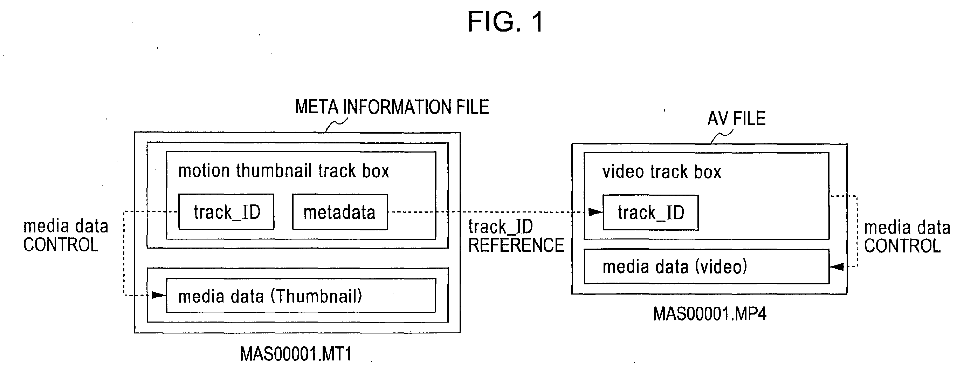

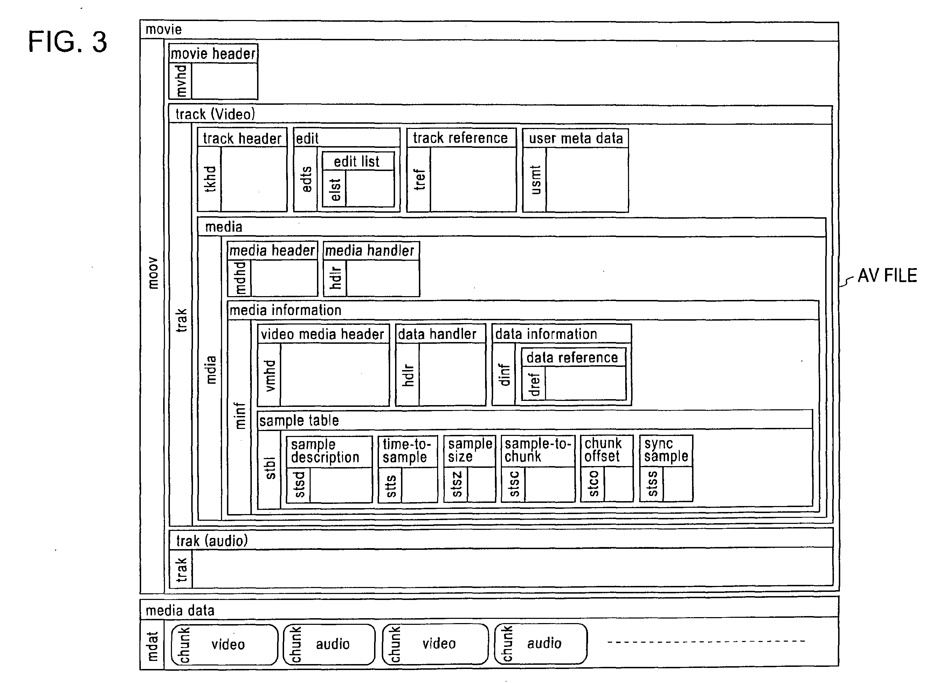

Here, Figs. 1 and 3 are charts showing this AV file. In the AV file, an extension (MP4) indicating that the file is an AV file is set, and the file name of the AV file is set using predetermined alphameric characters (MAS) and a series of numbers (00001) according to the order of creation. It should be noted that in Fig. 3, the description "box" is omitted from the drawing. An AV file is formed by a hierarchically organized box structure. A media data box in which pieces of the actual data of streaming data and audio data are grouped into a block, and a movie box in which pieces of control information for controlling the reproduction of these actual data are grouped into a block are formed at the highest layer of the AV file.

In the media data box, the actual data is further partitioned into hierarchically structured boxes, and streaming data and audio data are each assigned so as to allow editing, random access, or the like to be executed with the box at the lowest layer of this hierarchical structure as the minimum reproduction unit.

Here, this minimum reproduction unit is referred to as the sample. In streaming data, one picture is assigned to one sample. In the audio data, a plurality of samplings corresponding to one sample of streaming data are assigned to one sample.

In the media data box (Fig. 3), a chunk is formed by a collection of a plurality of samples, and this chunk is defined as the physical access unit of a recording medium. The actual data is recorded by the time-division multiplexing of this chunk.

On the other hand, in a movie box, pieces of control information for controlling the reproduction of the actual data assigned to the media data box are hierarchically organized in accordance with the kind of control information. In the movie box, the box type name is set as "moov", and movie header information, a video track box corresponding to streaming data, and an audio track box corresponding to audio data are formed at the highest layer.

Here, the type name of the movie header box is set as "mvhd", and the movie header box contains header information.

The video track box and the audio track box are provided at the same layer as this movie header box, and their type name is set as "track". Further, a track header box, an edit box, a track reference box, a user meta data box, a media box, and the like are provided at the highest, first layer, and each describe information relating to individual actual data of the media data box.

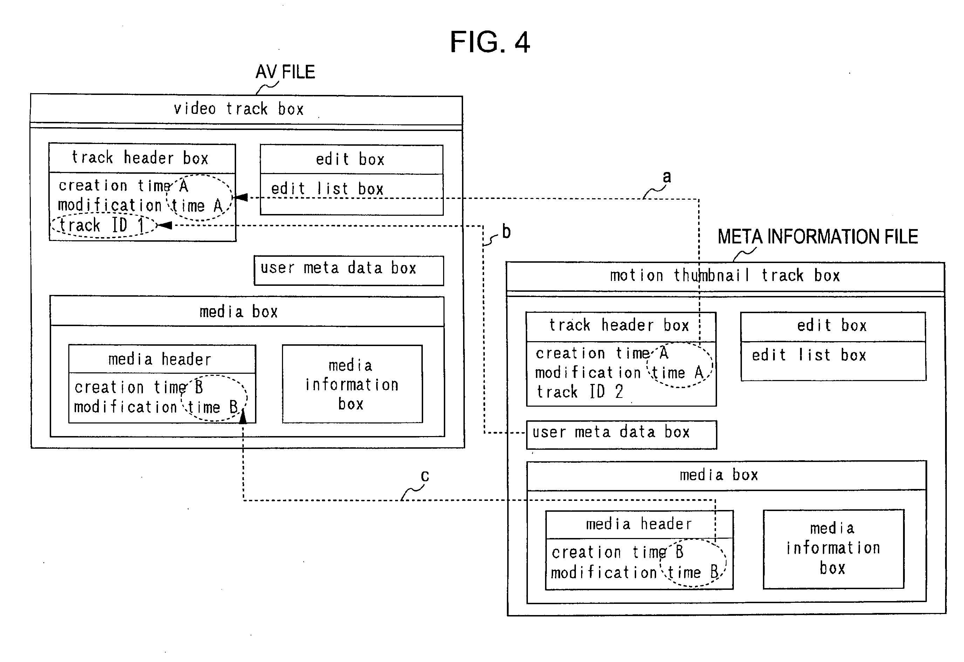

Here, the type name of the track header box is set as "tkhd", and the track header box contains header information. Further, as shown in Fig. 4, creation time information (creation time) indicating the date and time of creation of the track box, modification time information (modification time) indicating the date and time when the content of the track box is modified, and track ID as an identification number unique to the track box are assigned to the track header box. Here, the modification time information (modification time) in this format essentially records the date and time of a change made to a box at the same or lower layer. Accordingly, the track header box is modified when the contents of the user meta data box, edit box, and the like are modified.

Accordingly, in the example shown in Fig. 4, the track ID of the video track box is set to 1. Further, the creation time information (creation time) and modification time information (modification time) in the video track box are each set to a value A.

The type name of the edit box (Fig. 3) is set as "edts". The edit box contains an edit list box as required. Information such as function information for causing a given section of a moving picture to be displayed, for example, and reproduction speed information are set in the edit list box. This allows non-destructive editing of the AV file to be performed by the setting of this editing list box. It should be noted that the type name of this edit list box is set as "elst".

The type name of the track reference box is set as "tref", and information indicating the correspondence with other track boxes is assigned to the track reference box.

The type name of the user meta data box is set as "tref". The user meta data box is allowed to store various kinds of meta data uniquely set by the user.

The type name of the media box is set as "mdia", and information for managing the compression format, storage location, display time, and the like of each corresponding actual data is assigned to the media box. The media box includes a media header box, a media handler reference box (indicated as "media handler" in Fig. 3), and a media information box. Accordingly, these media header box, media handler reference box, and media information box are provided at the second layer of the track box.

Here, the type name of the media header box is set as "mdhd", and header information is assigned to the media header box. Further, as shown in Fig. 4, creation time information (creation time) indicating the date and time of creation of corresponding actual data, and modification time information (modification time) indicating the date and time when the corresponding actual data was modified or changed are assigned to the media header box. As the modification time information (modification time) in this case as well, in this format, the date and time of a change made to a box at the same or lower layer are assigned. Accordingly, when actual data is changed by non-destructive editing, the modification time information (modification time) is changed in a corresponding manner so as to indicate the date and time when the actual data was changed. Accordingly, when non-destructive editing is performed on an AV file, the modification time information (modification time) within the media header box is modified in the AV file.

The type name of the media handler reference box is set as "hdlr", and the media handler reference box records the kind of corresponding actual data.

Information on a sample as the minimum management unit is assigned to the media information box, and the type name of the media information box is set as "minf". Accordingly, in the AV file, the control information is set with the picture of one sample, which represents the minimum reproduction unit of the actual data, as a unit. Specifically, the media information box includes the media header box (represented as "video media header" in Fig. 3), data handler reference box (represented as "data handler" in Fig. 3), data information box, and sample table box corresponding to the actual data.

Here, the type name of the media header box is set in correspondence with the media handler reference box at the higher layer, and the media header box contains header information. Information relating to the handling of corresponding actual data is set in the data handler reference box, whose type name is set as "hdlr". Information on the storage location and storage method of the data to be actually referenced by the data reference box at the lowest layer is assigned to the data information box.

Control information corresponding to each individual sample as the minimum reproduction unit is assigned to the sample data box, and the type name of the sample table box is set as "stbl". The sample table box includes a sample description box, a time-to-sample box, a sample size box, a sample-to-chunk box, a chunk offset box, a sync sample box, a composition time-to-sample box, and the like. Accordingly, in the track box, control information for performing reproduction control on the actual data in minimum reproduction units is stored at the third layer.

Here, the sample description box retains information relating to decoding. Specifically, the data compression format and other related information are assigned to the sample description box. The time-to-sample box describes the relation between each individual sample and the time axis relating to decoding. The sample-to-chunk box describes the relationship between a chunk and samples constituting that chunk. The chunk offset box records positional information of the leading end of each chunk with reference to the leading end of the file. The sync sample box is available as an option, and the video track box describes the position information of an I picture in each individual sample in the form of a table.

Accordingly, while recording streaming data and audio data into the recording medium 33 by time-division multiplexing in units of chunk as the physical access unit of the recording medium, the central processing unit 41 acquires control information required for the creation of the movie box, and records and retains the control information into the RAM 42. Upon the completion of the recording of an imaging result into the recording medium 33, the central processing unit 41 records the control information thus recorded and retained in the format described above with reference to Figs. 1, 3, and 4 into the recording medium 33, thereby recording the AV file into the recording medium 33.

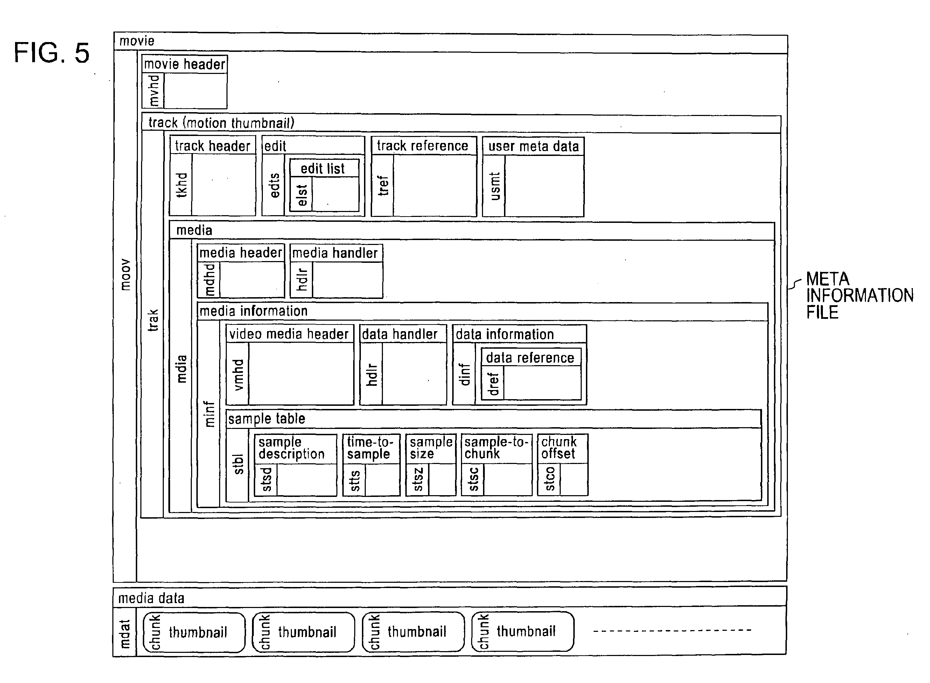

On the other hand, Fig. 5 is a chart showing a meta information file as compared with Fig. 3. A meta information file is a file based on a representative image. An extension (MTI) indicating a meta information file is set for the meta information file, and the meta information file is set to the same file name as that of the corresponding AV file, except for this extension (MTI) (see Fig. 1). Like the AV file, the meta information file is formed by a hierarchically organized box structure. Accordingly, in the meta information file, a media data box serving as a representative image storing section in which pieces of representative image data are grouped into a block, and a movie box serving as a control information storing section in which pieces of control information for controlling the reproduction of these actual data are grouped into a block are formed at the highest layer.

In this media data box, one thumbnail image is assigned to one sample. Further, one chunk is formed by one sample, and representative image data is stored as a succession of chunks. Accordingly, the media data box constitutes a representative image storing section for storing a representative image.

On the other hand, in the movie box, a movie header box, and a motion thumbnail track box corresponding to representative image data are formed at the highest layer. Further, the motion thumbnail track box includes a track header box, an edit box, a track reference box, a user meta data box, a media box, and the like. As in the AV file, various kinds of control information corresponding to representative image data are assigned to the respecitve boxes. Accordingly, in the meta information file, the control information is set with one representative image, which serves as the minimum reproduction unit of the actual data, as a unit. Further, the motion thumbnail track box constitutes a control information storing section for storing control information, which is used for controlling the reproduction of the representative image stored in the representative image storing section, in a hierarchical fashion in accordance with the kind of this control information.

Accordingly, while recording streaming data and audio data into the recording medium 33, the central processing unit 41 acquires control information required for the creation of the meta information file, and records and retains the control information into the RAM 42. Upon the completion of the recording of an AV file into the recording medium 33, the central processing unit 41 records the information thus recorded and retained in the format described above with reference to Fig. 5 into the recording medium 33, thereby recording the meta information file into the recording medium 33.

During the series of processing as described above, with respect to the AV file, the central processing unit 41 sets, as the creation time information (creating time) and the modification time information (modification time) in the track header box of the video track box, the date and time of recording of the video track box into the recording medium 33. On the other hand, as indicated by the arrow a in Fig. 4, with respect to the meta information file, the central processing unit 41 sets the creation time information (creation time) and the modification time information (modification time) in the track header box of the motion thumbnail track box to be the same value A as those of the creation time information (creation time) and modification time information (modification time) in the track header box of the corresponding video track box. This allows a mismatch between a moving picture file and a representative image to be easily and reliably detected.

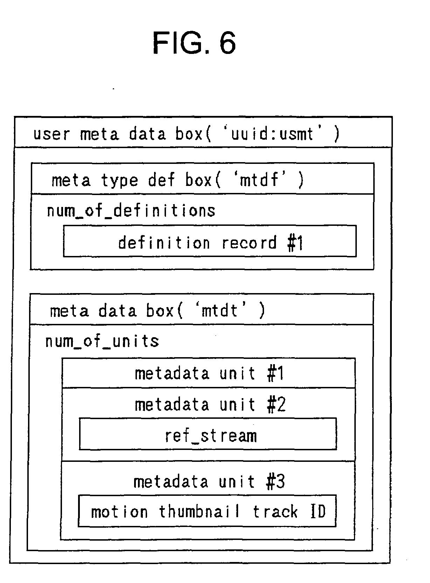

Further, as indicated by the arrow b in Fig. 4, the central processing unit 41 sets information (ref stream) (represented as "track ID" in Fig. 4) for specifying corresponding video data, which will be described later with reference to Fig. 6, in the user meta data box of the motion thumbnail track box, thereby recording the correspondence between the motion thumbnail track box and the video track box.

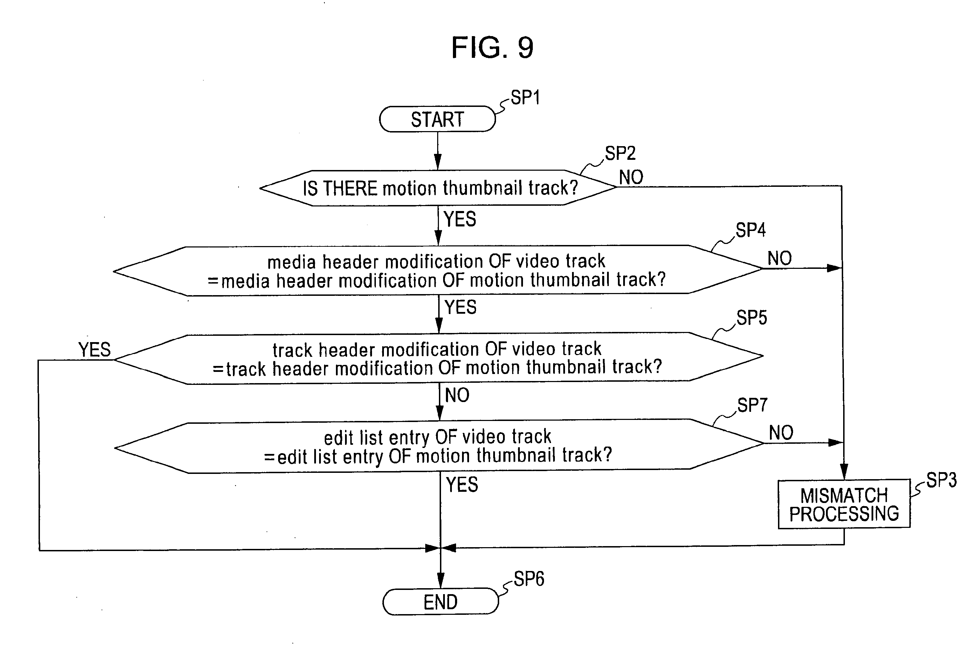

Further, as for the creation time information (creation time) and the modification time information (modification time) in the media header box of the AV file, like the creation time information (creation time) and the modification time information (modification time) in the track head box, the date and time of recording into the recording medium 33 is set. On the other hand, as indicated by the arrow c, the creation time information (creation time) and the modification time information (modification time) in the media header box of the meta information file are set to the same value B as those of the creation time information (creation time) and the modification time information (modification time) in the media header box of the corresponding video track box. It should be noted that as will be described later with reference to Fig. 9, since only the modification time information is used in the detection of a mismatch between a moving picture file and a representative image, as for the creation time information in each of the track header box and media header box in the meta information file, the processing of setting the creation time information to the same value as that in the video track box may be omitted.

The central processing unit 41 prepares the user meta data box of the motion thumb nail track box in the manner as shown in Fig. 6. Here, the user meta data box includes a meta data box and a meta type def box.

The type name of the meta data box is set as "mtdt", and the meta data box includes (ref stream (Metadata unit #2)) as information for specifying the corresponding moving picture. Here, this information (ref stream) for specifying the corresponding moving picture is information for specifying corresponding video track in the corresponding AV file. In this embodiment, the track ID of the video track provided in the AV file is set as this information. Accordingly, when the corresponding moving picture file is a file different from one in conformity with ISO/IEC 14496, specifically, when the corresponding moving picture file is a file formed by a program stream according to, for example, MPEG2, the information (ref stream) for specifying the moving picture is assigned a stream ID for specifying the streaming of video data in this program stream.

The meta data box is assigned a motion thumbnail track ID (Metadata unit #3) indicating that this track box is a motion thumbnail track. Here, in this embodiment, the motion thumbnail track is assigned control information for controlling the reproduction of a representative image. Hence, the motion thumbnail track ID indicates that the information stored in the motion thumbnail track box is control information for controlling the reproduction of a representative image. Accordingly, the meta information file is configured so that the motion thumbnail track ID indicating a motion thumbnail track is assigned at the same layer as the information (ref stream) for specifying the corresponding moving picture, and these information can be acquired simultaneously from one box to thereby make the processing of the meta information file faster. Further, the user meta data box at the higher layer is provided with the motion thumbnail track ID. Although it is necessary in the related art to discern the kind of a track by the kind of the actual data stored under the media handler reference box shown in Fig. 5, with the method according to this embodiment, it is possible to discern the kind of a track without performing analysis to lower layers, thus enabling quick processing of the meta information file.

The meta type def box stores information for defining, when recording undefined meta data other than the meta data planned to be recorded into the meta data box, what that undefined meta data indicates. Here, in this embodiment, as the above-mentioned data other than the meta data, information other than information (motion thumbnail track ID) indicating that the track box is a motion thumbnail track box, and information (ref stream) for specifying the corresponding moving picture is assigned. It should be noted that information other than these information is, for example, character information or the like that is freely inputted by the user as undefined meta data. Accordingly, in the meta information file, by setting the meta data box and the meta type def box at the same higher layer, even when unanticipated meta data is assigned, such meta data can be quickly analyzed for handling.

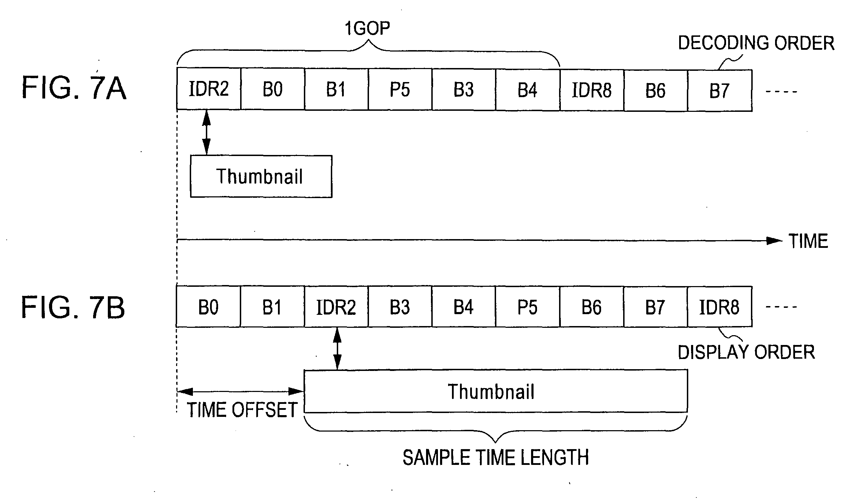

The central processing unit 41 records information on the time from the leading picture to the picture for creating a representative image after rearranging pictures in respective GOPs when creating streaming data, into a box at the higher layer of the motion thumbnail track box. That is, as shown in Fig. 7, the central processing unit 41 sets, in the edit list box of the motion thumbnail track box, offset time information (time offset) as the difference value of the reproduction time from the leading picture (the picture B0 as the leading B picture in the example shown in Fig. 7) in the display order of each GOP to the picture (the picture IDR2 as an I picture in this embodiment) in which a representative image is set. The central processing unit 41 can thus correctly detect the picture corresponding to the representative image by using this offset time information (time offset). It should be noted that in this embodiment, the offset time information (time offset) is set on the time scale of the video track box.

When, instead of such recording into the recording medium 33, outputting of an image result to an external apparatus is designated, the central processing unit 41 creates the AV file and the meta information file in the same manner as described above.

On the other hand, when the reproduction of an AV file recorded in the recording medium 33 is designated by the user, the central processing unit 41 controls the overall operation so as to reproduce the actual data sequentially set in the media data box by the control information set in the audio track box.

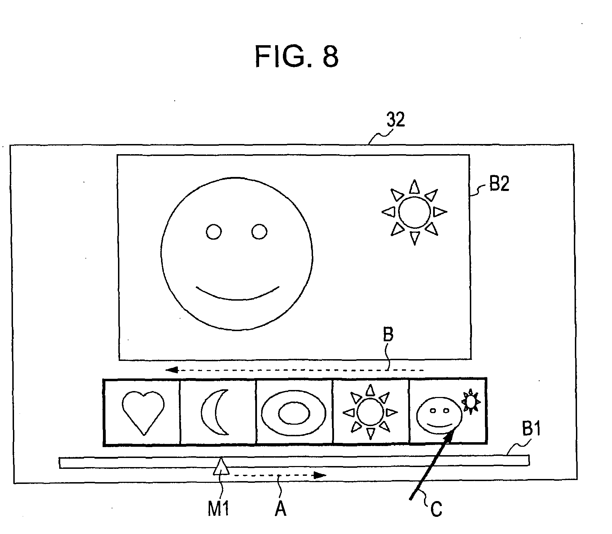

When this user designates the reproduction of a film roll at this time, the central processing unit 41 detects the corresponding meta information file, and on the basis of the control information set in the sample table box of the motion thumbnail track box, causes a predetermined number of pieces of representative image data to be reproduced from the recording medium 33 to be retained in the RAM 42. Further, as shown in Fig. 8, using the image data thus retained in the RAM 42, the predetermined number of representative images are displayed in list form below the center of the display screen of the LCD 32 while being arranged side by side on the time series in the lateral direction. Further, a scroll bar B1 is displayed below this list display, and a marker M1 is displayed at the position corresponding to the position of representative images displayed in list form on the streaming data.

Further, as indicated by the arrow A, this marker M1 is moved in response to an operation of the user, and the display of representative images is scrolled in correspondence with the movement of this marker M1 as indicated by the arrow B, thereby switching the display of representative images. Accordingly, in this case, on the basis of the control information set in the sample table box of the motion thumbnail track box, the central processing unit 41 reproduces the image data of representative images from the recording medium 33 in the direction of the time axis or in the reverse direction of the time axis, and modifies the image data retained in the RAM 42 on the basis of the image data thus reproduced. Further, the list display of representative images is switched on the basis of this modified image data.

When a representative image displayed in this manner is selected by the user as indicated by the arrow C, a still image based on the streaming data corresponding to the representative image selected at this time is displayed in a window B2 at the center of the display screen of the LCD 32. Accordingly, in this case, the central processing unit 41 detects the reproduction time information of the representative image selected by the user from the sample table box of the motion thumbnail track box, and detects the recording position information of the streaming data corresponding to this reproduction time information from the sample table box of the video track box. Further, on the basis of the recording position information thus detected, the streaming data of the one corresponding GOP is reproduced from the recording medium 33, followed by data decompression in the camera DSP 4. Further, the central processing unit 41 rearranges this decompressed data in the display order, and detects the picture at the time elapsed by the time corresponding to the offset time information (time offset) recorded in the edit list box from the leading picture of this rearranged GOP. The central processing unit 41 displays the still image of this picture in the window B2. When the still image is displayed in the window B2 in this way, and the user changes the selection of the representative image, the display of the still image is switched in a corresponding manner.

On the other hand, when the user designates the start of file reproduction with the still image thus displayed in the window B2, the reproduction of the streaming data and audio data of the AV file recorded in the recording medium 33 is started from the location displayed in the window B2. The central processing unit 41 thus enables easy random access.

When the user sets an edit point with the still image displayed in the window B2 in this way, an In/Out point is set in response to this operation on a per GOP basis. When the user further designates editing, the AV file recorded in the recording medium 33 is edited in correspondence with the setting of In/Out point. In this case, the central processing unit 41 executes the edit processing through non-destructive editing in which the actual data of the AV file recorded in the recording medium 33 is changed. Accordingly, as for the portion to be deleted by the editing, the streaming data is deleted from the media box, and also the image data and audio data of the representative image are deleted from the media data box in a corresponding manner, thereby preventing a mismatch between the representative image and the streaming data.

Further, in correspondence with the change of actual data as described above, the central processing unit 41 modifies a record in each of the video track box, audio track box, and motion thumbnail track box. At this time, as for the modification time information (modification time) in each of the track header box and media header box of the video track box, the central processing unit 41 sets the date and time when the editing result is recorded into the recording medium 33. Further, as for the modification time information (modification time) in each of the track header box and media header box of the motion thumbnail track box, the central processing unit 41 records the corresponding modification time information (modification time) of the video track box. Accordingly, the central processing unit 41 can easily and reliably detect a mismatch between the streaming data and the representative image.

There are cases where the recording medium 33 is detached from the video camera 1 and loaded into a computer or the like to have its content modified. Since the AV file is in a file format in conformity with ISO/IEC 14496, in the case of an apparatus capable of processing such a file conforming to ISO/IEC 14496, it is expected that there will be cases where the AV file is subjected to various edit processing so that its content is changed. Here, if such an apparatus is one that can be adapted to handle the motion thumbnail tack box provided in this AV file, the representative image is edited in a manner corresponding to the editing of the streaming data, thereby making it possible to prevent a mismatch between the streaming data and the representative data.

However, cases are also expected where the AV file is edited using an apparatus that cannot handle the motion thumbnail track box. In such cases, a mismatch occurs between the streaming data and the representative image. Further, cases are also expected where a moving picture file is recorded into the recording medium 33 by using such an apparatus, and the recording medium 33 is loaded into the video camera 1.

Accordingly, when the recording medium 33 is loaded or when list display of the AV file, the reproduction of the AV file, or the like is designated by the user, the central processing unit 41 detects a mismatch between the streaming data and the representative image by executing the procedure shown in Fig. 9.

That is, upon starting this procedure by the central processing unit 41, the process transfers from step SP1 to SP2. Here, on the basis of the file name of the AV file to be processed, the central processing unit 41 searches for the corresponding meta information file, thereby detecting the presence/absence of the motion thumbnail track box. Upon detecting the motion thumbnail track box, the central processing unit 41 confirms that the file is a meta information file on the basis of the motion thumbnail track ID provided in the user meta data box of this motion thumbnail track box. Further, on the basis of the information (ref stream) for specifying a moving picture, it is detected as to whether or not a corresponding video track box exists. It should be noted here that in the case where the recording medium 33 is loaded and the procedure shown in Fig. 9 is executed, or in the case where the list display of the AV file is designated by the user and the procedure shown in Fig. 9 is executed, the AV file to be processed is a moving picture file recorded in the recorded medium 33, and in the case where the reproduction of the AV file or the like is designated and the procedure shown in Fig. 9 is executed, the AV file to be processed is an AV file whose reproduction or the like is designated by the user.

If a negative result is obtained in step SP2 mentioned above, this means that the AV file to be processed is a file of the same format with no meta information file, so the central processing unit 41 transfers from step SP2 to step S3, and executes mismatch processing. The mismatch processing will be described later.

On the other hand, if a positive result is obtained in step SP2, the process transfers from step SP2 to step SP4. Here, the central processing unit 41 makes a determination as to whether or not there is a match between the modification time information (modification time) in the media header box of the video track box and the modification time information (modification time) in the media header box of the motion thumbnail track box (see Fig. 5). If a negative result is obtained at this time, it is determined in this case that a mismatch is occurring between the moving picture file and the representative image due to non-destructive editing of the streaming data of the AV file to be processed.

Accordingly, if a negative result is obtained in step SP4, the central processing unit 41 transfers from step SP4 to step SP3, and executes mismatch processing. In contrast, if a positive result is obtained in step SP4, the process transfers from step SP4 to step SP5. The mismatch processing will be described later.

In step SP5 mentioned above, the central processing unit 41 makes a determination as to whether or not there is a match between the modification time information (modification time) in the track header box of the video track box and the modification time information (modification time) in the track header box of the motion thumbnail track box (see Fig. 5). If a positive result is obtained at this time, this means that the AV file has not been edited by an apparatus that is not readily adapted to handle the motion thumbnail track box, so the central processing unit 41 transfers from step SP5 to step SP 6 and ends this procedure.

On the other hand, if a negative result is obtained in step SP5, this means that a box at the layer that is the same as or lower than the track header box of the video track box has been changed. Accordingly, the central processing unit 41 transfers from step SP5 to step SP7, and makes a determination as to whether or not there is a match between the content (edit list entry) of the edit list box of the video track box and the content (edit list entry) of the edit list box of the motion thumbnail track box.

If a negative result is obtained at this time, this means that there is no longer a match between the modification time information (modification time) in the track header box of the video track box and the modification time information (modification time) in the track header box of the motion thumbnail track box due to a change made to the content (edit list entry) of the edit list box by non-destructive editing that is not often performed in practice. Accordingly, the central processing unit 41 transfers from step SP7 to step SP3, and executes mismatch processing. The mismatch processing will be described later.

On the other hand, if a positive result is obtained in step SP7, the process transfers from step SP7 to step SP6, and this procedure is ended. It should be noted here that when a positive result is obtained in step SP7 and the processing is completed, the modification time information (modification time) in the track header box of the motion thumbnail track box may be reset so as to match the modification time information (modification time) in the track header box of the video track box.

Here, in the mismatch processing of step SP3, after a message is displayed on the LCD 32 and confirmation is obtained from the user, the central processing unit 41 creates or modifies the meta information file in correspondence with the editing of the streaming data.

Specifically, in the case where no corresponding thumbnail track box is provided, that is, in the case where a negative result is obtained in step SP2, for each one individual GOP, representative image data is acquired from the streaming data and recorded into the recording medium 33, thereby recording the actual data based on the representative image into the recording medium 33. Further, the motion thumbnail track box is created in correspondence with this actual data of the representative image and recorded into the recording medium 33. Through the series of processing as described above, the central processing unit 41 creates the meta information file and records it into the recording medium 33.

On the other hand, in the case where a negative result is obtained in step SP4, that is, in the case where the streaming data itself has been edited through destructive editing, representative image data is recreated from the streaming data, and the actual data of the representative image recorded in the recording medium 33 is modified. Further, the motion thumbnail track box is recreated in a corresponding manner and the motion thumbnail track box recorded in the recording medium 33 is modified. Further, in the same manner as described above with reference to Fig. 4, the modification time information (modification time) in the motion thumbnail track box is set in correspondence with the video track box. Accordingly, in this case, the meta information file is modified in correspondence with the AV file. It should be noted that in this case, instead of recreating the image data of the representative image and the motion thumbnail track box, the series of processing may be executed by the modification of the image data of the representative image and motion thumbnail track box recorded in the recording medium 33. Alternatively, by providing the edit list box in the motion thumbnail track, the representative image data may be edited in correspondence with the editing of the streaming data.

On the other hand, in the case where a negative result is obtained in step SP7, that is, in the case where the content (edit list entry) of the edit list box has been changed by non-destructive editing, the content (edit list entry) of the edit list box of the motion thumbnail track box is modified in correspondence with this content (edit list entry) of the edit list box. Further, in the same manner as described above with reference to Fig. 4, the modification time information (modification time) in the motion thumbnail track box is set in correspondence with the video track box. It should be noted that in this case, the actual data may be edited as in the case where a negative result is obtained in step SP4.

### (2) Operation of Embodiment

According to the above-described configuration, in the video camera 1 (see Fig. 2), an imaging result based on a moving picture is acquired by the camera section 2, and this imaging result is processed by the camera DSP 4 to create video data. In the video camera 1, video data for monitor is created from this video data, and this video data for monitor is inputted to the control section 3 so that the monitor image of the imaging result is displayed on the LCD 32.

When the user designates the recording of the imaging result in this state, the video data is subjected to data compression in the compression/decompression section 24 of the camera DSP 4, and this streaming data is recorded into the recording medium 33 via the control section 3 together with audio data. At this time, the streaming data and audio data are each subjected to time-division multiplexing to create the media data box, and this media data box is recorded into the recording medium 33. Further, reproduction time information or the like as the management information of the data thus subjected to time-division multiplexing is accumulated in the RAM 42. When the user designates the end of recording, the management information accumulated in the RAM 42 is organized into a box that is hierarchically structured according to the kind of the management information to thereby create the movie box, and this movie box is recorded into the recording medium 33. Accordingly, in the video camera 1, the moving picture file based on the imaging result is recorded into the recording medium 33 as the AV file.

While recording the streaming data in this way, in the video camera 1, the resolution of a picture set as an I picture is lowered to thereby form a thumbnail image for each one GOP in the compression/decompression section 24, thereby forming a representative image. Further, the image data of this representative image is outputted to the control section 3 to be held therein. Further, various kinds of information required for creating the control information for controlling the reproduction of this representative image are held in the same manner. In the video camera 1, upon the completion of the recording of the AV file, the media data box is created in the control section 3 from the retained image data of the representative image, and this media data box is recorded into the recording medium 33. Further, the control information for controlling the reproduction of the representative image recorded in the media data box is created from the various kinds of information held in the control section 3. This control information is organized into a box that is hierarchically structured according to the kind of the control information to thereby create the movie box, and this movie box is recorded into the recording medium 33. Accordingly, in the video camera 1, a representative image representing a predetermined group of frame images constituting the moving picture file based on the imaging result is recorded into the recording medium 33 in the form of a file different from the moving picture file.

In the video camera 1 described above, the image data of one representative image is assigned to one sample representing the minimum reproduction unit of the actual data to thereby create the media data box. Further, the control information is set so that the reproduction can be controlled in the minimum reproduction units, and the movie box of a hierarchical structure is created. In the video camera 1 as described above, the first layer of the motion thumbnail track box provided in this movie box is assigned the motion thumbnail track ID as the information indicating that the information stored in this motion thumbnail track box is the control information for controlling the reproduction of the representative image. Further, information indicating the date and time of modification of a moving picture file is stored in the media box at the second layer, and control information for performing reproduction control with one representative image as the minimum reproduction unit is stored in the sample table box at the third layer.

Accordingly, in the video camera 1 as described above, in accordance with the record in the sample table box of the motion thumbnail track box, as in the case of reproducing video data, representative images can be reproduced one by one and provided to the user. Accordingly, in the video camera 1, the representative image at the desired location can be easily and quickly reproduced and provided, thereby making it possible to enhance the ease of random access when reproducing the representative image.

Further, on the basis of the motion thumbnail track ID provided in the motion thumbnail track box, it can be quickly grasped that the file concerned is a meta information file. Accordingly, on the basis of the control information provided in the motion thumbnail track box, the corresponding video track can be reproduced, thereby allowing quick random access to the streaming data by using the representative image.

Further, a mismatch between the moving picture file and the representative image data can be easily and reliably detected on the basis of the modification date and time of the moving picture file stored in the media box. Further, these pieces of information are hierarchically recorded such that the motion thumbnail track ID, the information indicating the modification date and time of the moving picture file, and the information for performing reproduction control with one representative image as the minimum reproduction unit are stored in the stated order from the higher layer, thereby making it possible to quickly start various kinds of processing relating to the AV file. For example, when determining the kind of a meta information file, if the motion thumbnail track ID is not recorded, it becomes necessary to determine the kind of the actual data stored in the media handler reference box at the further lower layer. According to the motion thumbnail track ID, however, the kind of a meta information file can be determined merely by analyzing the motion thumbnail track to the first layer. Further, as for the detection of a mismatch between the moving picture file and the representative image as well, this can be performed by analyzing the motion thumbnail track to the second layer at the maximum. Accordingly, the motion thumbnail track may be analyzed to the lowest layer only after a confirmation is obtained by the mismatch processing, thereby allowing various kinds of processing of the representative image to be executed quickly.

In this way, according to this embodiment, the video data is recorded in such a way as to allow random access using a representative image, thereby enhancing the ease of random access when reproducing this representative image. Further, a mismatch between the moving picture file and the representative image can be easily and reliably detected.

Specifically, in the AV file according to the video camera 1 as described above, a mismatch occurs between the streaming data and the representative image mostly when this AV file is edited by using an apparatus that is not readily adapted to handle the motion thumbnail track box but is capable of processing the video track box and the audio track box. Further, examples of edit processing using such an apparatus include destructive editing in which the actual data is directly edited, and non-destructive editing performed by the setting of the edit list box. When the actual data is directly edited using such an apparatus, the modification time information (modification time) in the media header box provided in the track box of the video track box, and the modification time information (modification time) in the track header box at the higher layer of this media header box are modified. On the other hand, during non-destructive editing in which the edit list box is modified, the edit list box of the video track box, and the modification time information (modification time) in the track header box are modified. Further, in the edit processing using such an apparatus, the motion thumbnail track box is not modified.

In the video camera 1, as for the video track box, the modification time information (modification time) in the media header box, and the modification time information (modification time) in the track header box are set according to the creation/modification date and time. Further, the modification time information (modification time) in the media header box of the motion thumbnail track, and the modification time information (modification time) in the track header box are set to be the same as the modification time information (modification time) in the media header box of the video track box, and the modification time information (modification time) in the track header box, respectively.

Accordingly, on the basis of a mismatch between the modification time information (modification time) set in the video track box, and the modification time information (modification time) set in the motion thumbnail track box, a case where the AV file has been edited with an apparatus that is not readily adapted to handle the motion thumbnail track box is detected, thereby allowing easy detection of a mismatch between the streaming data and the representative image.

Further, by executing such setting of the modification time information (modification time) at a plurality of different layers, more specifically, with respect to the modification time information (modification time) in the track header box that is changed by both destructive editing and non-destructive editing, and to the modification time information (modification time) in the media header box at a layer lower than the track header box and subject to modification only by destructive editing, a mismatch due to destructive editing and a mismatch due to non-destructive editing can be easily discriminated from each other by detecting a mismatch between respective modification time information (modification time) at these two layers (Fig. 8). It is thus possible to reduce the time required for the processing of an AV file, while quickly executing the processing to achieve a match when a mismatch occurs.

In the video camera 1, the user meta data box that can be uniquely defined by the user is provided at the same layer as the track header box in which the modification time information (modification time) is set as described above, and information (ref stream) for specifying the moving picture corresponding to this user meta data box is assigned. In this embodiment, the track ID of the video track box of the corresponding AV file is assigned to this information (ref information). Accordingly, in the meta information file, the relation between the motion thumbnail track box and the video track box can be grasped for quick processing without performing analysis deep down to lower layers.

In the motion thumbnail track box, the above-described motion thumbnail track ID indicating that the track box concerned is a motion thumbnail track is assigned to this user meta data box. Accordingly, the meta information file is set so that the motion thumbnail track can be identified without performing analysis deep down to lower layers (Fig. 5).

The meta type def box of this user meta data box is assigned information for defining, when recording undefined meta data other than the meta data planned to be recorded into the meta data box (mtdt), what that data indicates. Accordingly, in the meta information file, by setting the meta data box and the meta type def box at the same higher layer, even when unanticipated meta data is assigned, such meta data can be quickly analyzed for processing.

Further, in the motion thumbnail track box, the offset time information (time offset), which represents the difference value of the reproduction time from the leading picture in the display order of each GOP to the picture with respect to which a representative image is set, is also set in the edit list box that is at the same layer as the track header box. Accordingly, the meta information file allows, on the basis of a representative image selected by the user, correct random access to the leading end of the corresponding GOP, thereby making it possible to detect the offset time information (time offset) required for the correct random access without performing analysis deep down to lower layers. Quick processing of the AV file can be performed in this respect as well.

On the other hand, when the user designates the reproduction of the film roll of the AV file recorded into the recording medium 33 in this way, in the video camera 1, a predetermined number of successive representative images are reproduced from the recording medium 33 in accordance with the record in the sample table box of the motion thumbnail track box, and these representative images are arranged and displayed on the LCD 32 (see Fig. 7).

When the user operates the scroll bar B1 displayed below the display of the representative images, a representative image succeeding to the representative image being currently displayed is reproduced from the recording medium 33, and the display of the LCD 32 is switched over on the basis of this reproduced representative image. Accordingly, in the video camera 1 as described above, the representative image data is reproduced in accordance with the record in the motion thumbnail track box, thereby making it possible to enhance the ease of random access with respect to the representative image.

Further, when the user selects a representative image by switching the display of representative images, on the basis of the reproduction time information of the representative image thus selected by the user, the corresponding streaming data is reproduced and subjected to data decompression. The image of the picture at the time elapsed by the time corresponding to the offset time information (time offset) set in the edit list box from the leading picture of the video data which has undergone data decompression as described above and has been rearranged in the display order, is displayed in the window B2. Accordingly, after performing random access with the representative image, the streaming data can be reproduced from the location of the random access point.

In the video camera 1, in the list display of representative images, edit point setting is accepted to perform editing of the AV file. That is, in the video camera 1 as described above, a representative image is selected by the user, and edit point setting is accepted in this way, and further, upon designation by the user, the actual data of the streaming data is edited in correspondence with this edit point setting, and the record in the video track box is modified in a corresponding manner. Further, the actual data based on the representative image is edited in correspondence with this editing of streaming data, and the motion thumbnail track box is modified in a corresponding manner, so the meta information file is modified.

In the case of this edit processing as well, in the video camera 1 as described above, the modification time information (modification time) in the media header box and the modification time information (modification time) in the track header box are each set to the modification date and time when this edit processing is executed. The modification time information (modification time) in the media header box of the motion thumbnail track, and the modification time information (modification time) in the track header box are set to be the same as the modification time information (modification time) in the media header box of the motion thumbnail track box, and the modification time information (modification time) in the track header box, respectively. This setting allows a mismatch between the streaming data and the representative image to be easily and quickly detected.

That is, in the video camera 1 as described above, in cases such as when the above-mentioned film roll reproduction is designated by the user or when the recording medium 33 is loaded, a search is performed for a meta information file corresponding to the AV file to be processed. When the meta information file is found, a determination is made as to whether or not the modification time information (modification time) in the media header box matches between the video track box of the AV file and the motion thumbnail track box of the meta information file. A mismatch occurring between the streaming data and the image data of the representative image due to the editing of the actual data is thus detected (Fig. 8).

Subsequently, it is determined whether or not the modification time information (modification time) in the track header box matches between the video track box and the motion thumbnail track box. Accordingly, a mismatch occurring between the streaming data and the representative image data due to the editing of the edit list box is detected together with the case where a box other than the edit list box at the same layer as this track header box has been modified.

Subsequently, it is determined whether or not the contents of the respective edit list boxes match each other. A mismatch occurring between the streaming data and the representative image due to the editing of the edit list box is thus detected.

When a mismatch is detected in this way, upon designation by the user, the meta data box of the meta information file is created and modified in accordance with the streaming data, or the motion thumbnail track box of the meta information file is modified in a corresponding manner, thereby eliminating a state in which a mismatch occurs between the moving picture file and the representative image.

### (3) Effect of Embodiment

According to the configuration as described above, the representative image is stored in the representative image storing section, and the information indicating that the stored information is the control information for the representative image, the information indicating the modification date and time of the moving picture file, and the control information with one representative image set as the minimum reproduction unit are stored hierarchically in order into the control information storing section, thereby enhancing the ease of random access when reproducing the representative image, and further making it possible to easily and reliably detect a mismatch between the moving picture file and the representative image.

Further, by recording the information (modification time) relating to the modification date and time of the moving picture file separately at the first layer, a mismatch between the moving picture file and the representative image can be easily and reliably detected in correspondence with the non-destructive editing and destructive editing of the moving picture file.

More specifically, by providing the modification time information (modification time) of the track header box that is subject to change by both destructive editing and non-destructive editing, and the modification time information (modification time) of the media header box at a layer lower than the track header box and subject to modification only by destructive editing, the modification time information on the representative image side is set so as to match the modification time information on the video data side, thereby making it possible to easily and reliably detect a mismatch between the moving picture file and the representative image.

Further, the file name of the metal information file as the representative image file is set to be the same as the file name of the moving picture file except for the extension portion of the file name, thereby making it possible to easily and reliably detect the meta information file.

Further, of a plurality of pictures corresponding to one representative image, the representative image is created from the I picture as the leading picture in the data compression order, and the offset time information indicating the offset time from the leading picture in the reproduction order of these plurality of pictures to the picture from which the representative image is created is recorded, thereby making it possible to perform correct random access to the picture corresponding to the representative image.

### Embodiment 2

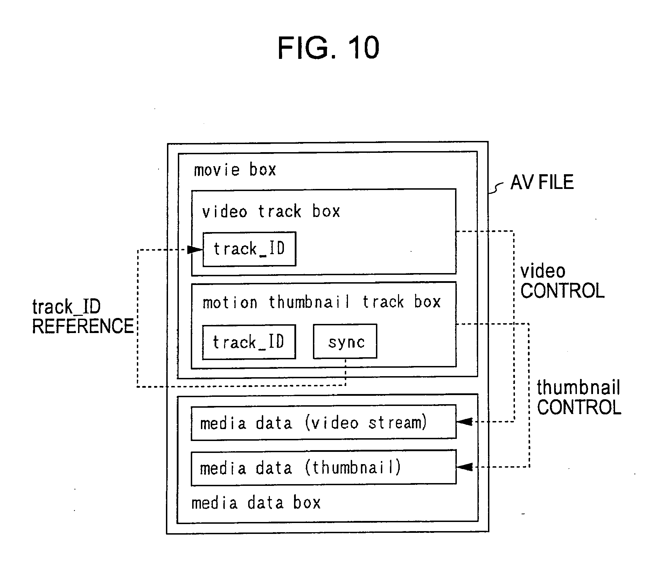

Fig. 10 is a schematic diagram showing an AV file created with a video camera according to Embodiment 2 of the present invention as compared with Fig. 1. In this embodiment, an AV file is formed by integrating streaming data and representative image data together. That is, like the AV file described above with reference to Embodiment 1, in the AV file, there are formed a media data box in which pieces of the actual data of audio data are grouped into a block, and a movie box in which pieces of control information for controlling the reproduction of these actual data are grouped into a block.

Here, in the same manner as described above with reference to Embodiment 1, one sample of streaming data, representative image, and audio data is set in the media data box. Further, the media data box is formed by a succession of chunks of these streaming data, representative image, and audio data.

On the other hand, the movie box is formed by adding the motion thumbnail box to the video track box and the audio track box described above with reference to Embodiment 1. Further, the motion thumbnail track is configured in the same manner as that of the meta information file described above with reference to Embodiment 1 except in that the user meta data box differs from that of the meta information file.

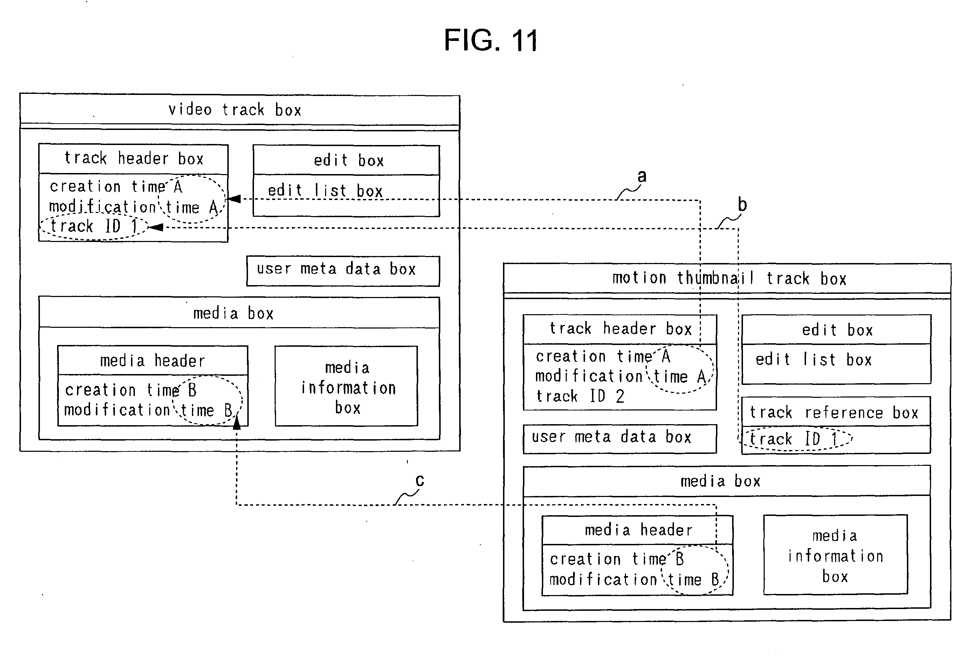

Here, as shown in Fig. 11 in comparison to Fig. 4, as indicated by the arrows a and b, as in the video track box and the motion thumbnail track box described above with reference to Embodiment 1, the creation time information (creation time) and modification time information (modification time) in the video track box are set to the creation time information (creation time) and modification time information (modification time) in the motion thumbnail track box.

On the other hand, as for the correspondence with the video track box, instead of the information (ref stream) for specifying a moving picture in the motion thumbnail box, the track ID of the corresponding video track box is set in the track reference box of the motion thumbnail track box, thus recording the correspondence between the motion thumbnail track box and the video track box. Accordingly, in the processing of detecting a mismatch between the moving picture file and the representative image in this embodiment, it is determined whether or not a corresponding video track box exits in accordance with this record in the track reference box.

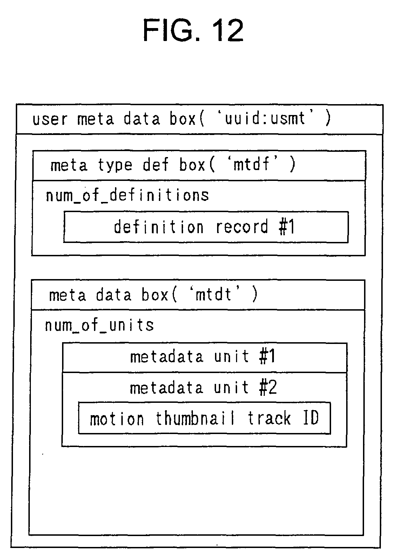

Here, as shown in Fig. 12 in comparison to Fig. 6, as in Embodiment 1, the user meta data box includes a meta data box and a meta type def box. The meta type def box is configured in the same manner as in Embodiment 1.

On the other hand, in the meta data box, the information (ref stream) for specifying a moving picture is omitted, and only the motion thumbnail track ID indicating that the track box is a motion thumbnail track is provided.

According to this embodiment, the same effect as that of Embodiment 1 can be attained also by recording the image data and management information of the representative image in a file structure integrated with the streaming data.

### Embodiment 3

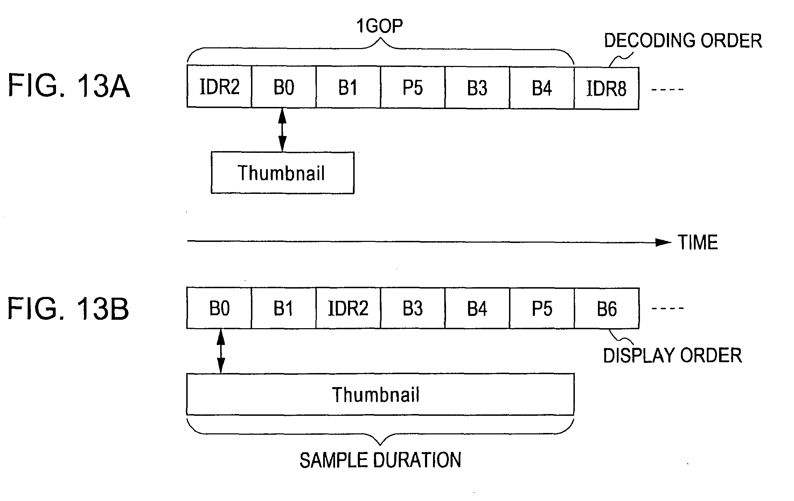

Figs. 13A and 13B are schematic diagrams showing the setting of a representative image of an AV file according to Embodiment 3 of the present invention in comparison to Fig. 6. In this embodiment, the representative image is created from the leading picture in the display order. That is, in this embodiment, as shown in Fig. 13B, on the basis of a closed GOP, successive pictures are sequentially set as B pictures B0, B1, an I picture IDR2, B pictures B3, B4, and an I picture P5, and so on, and these pictures are encoded by arranging them in the encoding order, thereby creating streaming data.

In this embodiment, the image data of the representative image is created by lowering the resolution of the B picture B0, which is the leading picture in the display order of this GOP before the pictures are rearranged at the time of encoding described above. Accordingly, in this case, the picture to be reproduced first upon performing data decompression on the streaming data of one GOP becomes the B picture B0 corresponding to the representative image. Accordingly, in this embodiment, the recording of the offset time information described above with reference to Embodiment 1 is omitted, and when a representative image is selected by the user, the leading picture obtained by performing data decompression on the corresponding GOP is provided to the user.

The video camera according to this embodiment in configured in the same manner as the video camera described above with reference to Embodiment 2, except in that these embodiments differ in the configuration relating to the representative image.

According to this embodiment, the representative image is created from the leading picture in the display order of a plurality of pictures corresponding to one representative image, thereby allowing correct random access to the picture corresponding to the representative image to be performed by simple processing in comparison to Embodiment 1.

### Embodiment 4

In this embodiment, by creating the meta information file separately from the AV file, this AV file is recorded in a file format different from the format prescribed by ISO/IEC 14496 described above with reference to Embodiment 1. That is, another file format may be applied to the AV file. In this embodiment, a file format of MPEG2 transport stream is employed as this another file format. It should be noted that this embodiment is configured in the same manner as Embodiment 1 except for the above-mentioned file format of the AV file and the configuration relating to this file format. The following description will thus be made while referring to the configuration described above with reference to Embodiment 1.

Accordingly, in this embodiment, while creating the MPEG2 transport stream by multiplexing the streaming data of video data and audio data, the central processing unit 41 records this MPEG2 transport stream into the recording medium 33. When the stopping of recording is designated by the user, the central processing unit 41 completes the recording of an AV file into the recording medium 33, and subsequently records a meta information file into the recording medium 33.

Here, in the same manner as described above with reference to Embodiment 1, the meta information file is formed by storing control information in a hierarchical fashion. Since other file formats such as the MPEG2 transport stream do not support the concept of a track box, as the creation time information (creation time) and the modification time information (modification time) provided in each of the track header box and media header box of the meta information file, the creation time information and modification time information of the AV file in the file management system of the recording medium 33 which manages the AV file are respectively recorded.

Further, PID (Program ID) for specifying the packet of video data in an AV file is assigned as the information (ref stream) for specifying a moving picture. Another identification data may be assigned instead of PID (Program ID).

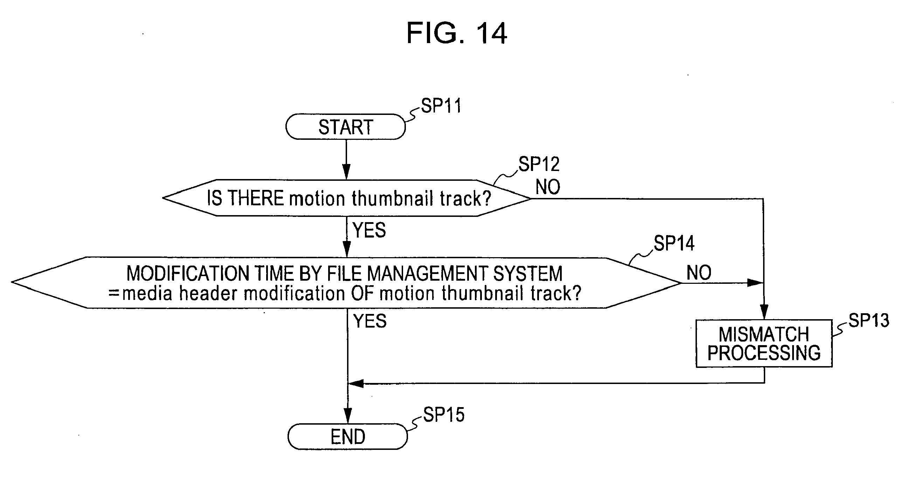

Accordingly, the central processing unit 41 detects a mismatch between the moving picture file and the representative image by executing the procedure shown in Fig. 14 as compared to Fig. 9. That is, when the central processing unit 41 starts the procedure shown in Fig. 4 in the same manner as described above with reference to Embodiment 1, the process transfers from step SP11 to step SP12. Here, on the basis of the file name of the AV file to be processed, the central processing unit 41 searches for the corresponding meta information file. When the meta information file is found, the motion thumbnail track ID is evaluated, thereby detecting the presence/absence of the motion thumbnail track box. Upon detecting the motion thumbnail track box, on the basis of the information (ref stream) for specifying a moving picture provided in the user meta data box of this motion thumbnail track box, it is detected as to whether or not a corresponding video track box exists.

If a negative result is obtained in step SP12 mentioned above, this means that the AV file is a file of the same format with no meta information file, so the central processing unit 41 transfers from step SP12 to step S13, and executes mismatch processing. The mismatch processing will be described later.

On the other hand, if a positive result is obtained in step SP12, the process transfers from step SP12 to step SP14. Here, the central processing unit 41 detects the modification time of the AV file from the file management system that manages the AV file, and makes a determination as to whether or not this modification time matches the modification time information (modification time) in the media header box of the motion thumbnail track box. It should be noted that in the case where the modification date and time of the AV file is directly described in the AV file, other information described in the AV file may be used. If a negative result is obtained at this time, it is determined in this case that a mismatch is occurring between the moving picture file and the representative image due to destructive editing of the AV file to be processed.

Accordingly, if a negative result is obtained in step SP14, the central processing unit 41 transfers from step SP14 to step SP13, and executes mismatch processing. The mismatch processing will be described later. Here, in the MPEG2 transport stream, there is no concept of an edit list, and the editing performed is exclusively non-destructive editing. Accordingly, if a positive result is obtained in step SP14, the central processing unit 41 transfers from step SP14 to step SP15, and ends this procedure.

In the mismatch processing of step SP13, if a negative result is obtained in step SP12, the central processing unit 41 analyses the AV file to create a meta information file anew, and records this meta information file into the recording medium 33. Then the central processing unit 41 transfers to step SP15 and ends this procedure. On the other hand, if a negative result is obtained in step SP14, the central processing unit 41 analyzes the AV file to recreate a meta information file, and records this meta information file into the recording medium 33 again. The process then transfers to step SP15 to end this processing.

According to this embodiment, the same effect as that of Embodiment 1 can be attained also in the case where the AV file is recorded in another format such as the MPEG2 transport stream.

### Embodiment 5

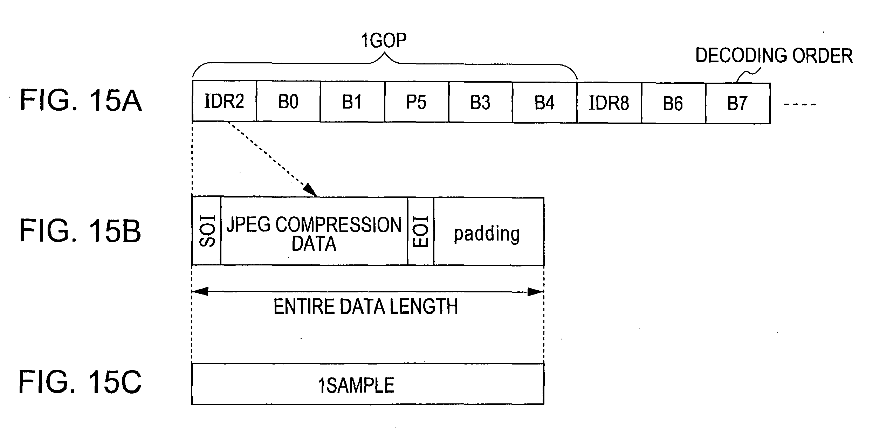

Figs. 15A to 15C are schematic diagrams illustrating how representative images are created in a video camera according to Embodiment 5 of the present invention. It should be noted that this embodiment is configured in the same manner as the vide camera according to Embodiment 1 except in the configuration relating to the creation of representative images. Accordingly, the following description will be made while referring to the drawings used in Embodiment 1, and repetitive description will be omitted.

In this embodiment, when creating streaming data (Fig. 15A), the compression/decompression section 24 (Fig. 2) creates thumbnail image data by lowering the resolution of a predetermined picture. Further, this thumbnail image data is encoded in the JPEG (Joint Photographic Coding Experts Group) format to generate representative image data (Fig. 15B). At this time, the compression/decompression section 24 creates the representative image data so that the data size of one representative image becomes a fixed data size.

Specifically, the compression/decompression section 24 (Fig. 2) sets the data size of one representative image to a fixed data size of, for example, 4 [MB] by arranging padding data with a value of 0, for example, subsequent to EOI (End of Image) indicating the end of the data created by encoding. Here, SOI means Start Of Image.

The control section 3 sets one representative data of this fixed data volume as one sample to create the meta information file (Fig. 15C). Accordingly, the control section 3 describes this fixed data volume into the sample size box of the meta information file. In this regard, in the case of a file format in conformity with ISO 14496, the description can be omitted with respect to the same sample size box. Accordingly, the control section 3 describes the fixed data volume into the sample size box only with respect to the leading representative image, and the description of the fixed data volume into the sample size box is omitted with respect to the succeeding representative images, thereby reducing the data volume of the meta information file.

In correspondence with the setting of the sample size box in the meta information file as described above, at the time of reproduction, the control section 3 locates the recording position of each representative image on the basis of this fixed data volume and reproduces the representative image from the recording medium without reading out the sample size box at the lower layer.

According to this embodiment, the representative image is compressed and stored in a fixed data volume into the meta information file, thereby making it possible to attain the same effect as that of Embodiment 1 by reducing the data volume of the meta information file. Further, an improvement can be achieved in terms of the access speed to the recording medium at the time of reproduction.

### Embodiment 6

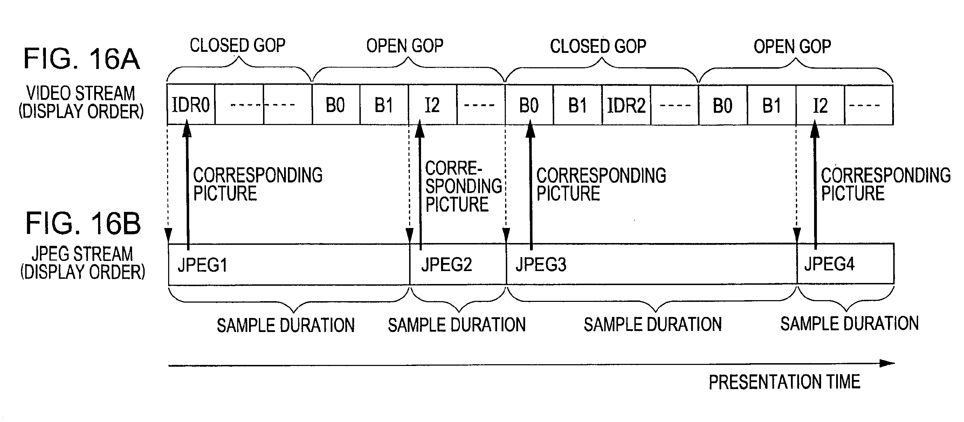

Figs. 16A and 16B are schematic diagrams illustrating the processing of representative images in a video camera according to Embodiment 6 of the present invention. It should be noted that this embodiment is configured in the same manner as the video camera according to each of Embodiment 1 and Embodiment 5 except for the configuration relating to the processing of representative images that will be described below. Accordingly, the following description will be made while referring to the drawings used in Embodiment 1, and repetitive description will be omitted.

Here, in the video camera according to this embodiment, the compression/decompression section 24 cyclically sets picture types in a sequential manner to set GOPs, and encodes video stream. Further, the compression/decompression section 24 switches the GOP structure by the setting of an operation mode by the user in accordance with the control of the control section 3. Specifically, for example, when the user selects a high image quality mode, the compression/decompression section 24 creates video stream with an open GOP, whereas when the user selects a normal mode, the compression/decompression section 24 creates video stream with a closed GOP. It should be noted that video stream may be created with an open GOP or a closed GOP at a predetermined cycle. Here, an open GOP refers to a GOP structure in which some of pictures referenced by pictures in a GOP exist in the immediately precious GOP. The advantage of an open GOP is that it generally provides a better image quality in comparison to that of a closed GOP. In contrast, a closed GOP refers to a GOP structure in which pictures referenced by pictures within one GOP exist within that GOP.

The compression/decompression section 24 creates thumbnail image data for each individual one or plurality of GOPs to thereby create representative image data. Further, the compression/decompression section 24 compresses the representative image data in the JPEG format and outputs the compressed data to the control section 3. At this time, the compression/decompression section 24 creates a thumbnail image with the same resolution between when the corresponding GOP is an open GOP and when the corresponding GOP is a closed GOP. In the case where the corresponding GOP is a closed GOP, data is compressed at a high image quality in comparison to that in the case of an open GOP. Accordingly, in the case of an open GOP, the representative image is encoded in such a manner that the data volume becomes large in comparison to that in the case of a closed GOP.

At this time, as shown in Figs. 16A and 16B, the compression/decompression section 24 switches the picture for forming a representative image in accordance with the kind of the GOP in the video stream. Specifically, when the GOP in the video stream is a closed GOP, a representative image is created from the leading picture in the display order from among the pictures constituting the corresponding one or plurality of GOPs. In contrast, when the GOP in the video stream is an open GOP, a representative image is created from the leading I picture in the display order from among the pictures constituting the corresponding one or plurality of GOPs.

Accordingly, as shown in Figs. 16A and 16B, when recording video stream by splice recording while switching between GOP structures, the control section 3 switches the picture for creating a representative image in response to this switching of the GOP structures. Accordingly, with this video camera, when performing film roll reproduction, the video stream is edited with the representative image taken as a reference, so that the consistency between the representative image and the video stream is not jeopardized when reproducing the editing result with another apparatus.

Accordingly, in the example shown in Figs. 16A and 16B, the leading representative image data JPEG1 is created from the I picture IDR that is the leading picture of the leading closed GOP, and the succeeding representative image data JPEG2 is created from the leading I picture I2 of the succeeding open GOP. Further, the succeeding representative image data JPEG3 is created from the B picture B0 that is the leading picture of the succeeding closed GOP, and the succeeding representative image data JPEG4 is created from the leading I picture I2 of the succeeding open GOP.

Further, the control section 3 assigns, as the duration of each representative image, the reproduction time on the video stream representing the period of time from the start of the reproduction of the picture from which a representative image is created, to the start of the reproduction of a succeeding representative image, and records this duration into the sample table box of each representative image. Accordingly, in this case, the control section 3 records the sample duration of each representative image as the reproducing duration of the corresponding video stream into the meta information file.

It should be noted that in this embodiment, also in the case where the recording medium 33 into which an AV file is recorded using another apparatus is loaded, and the user designates the creation of a meta information file, in the same manner as described above, the meta information file is created by switching the picture for creating a representative image in accordance with the kind of the GOP.

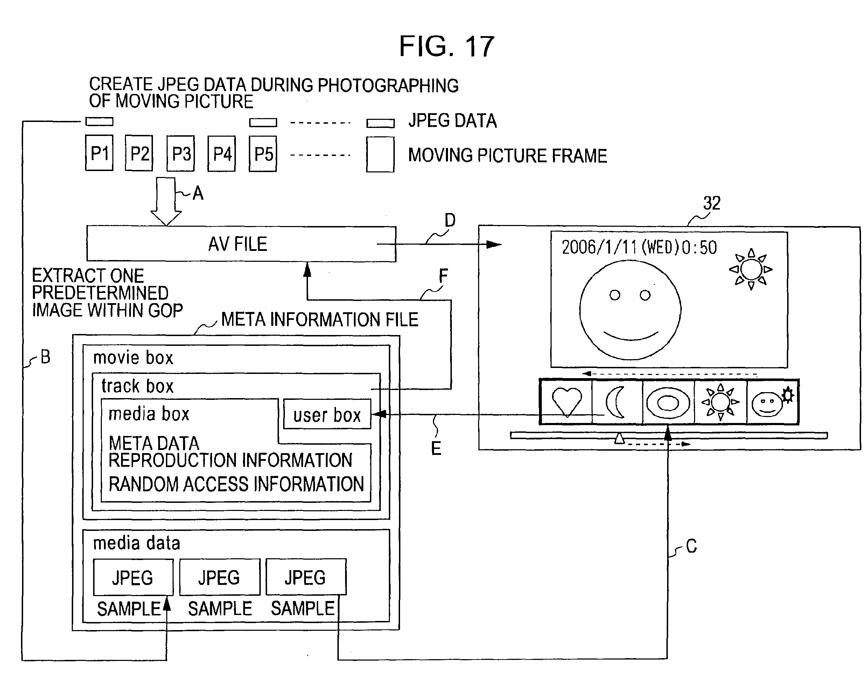

Accordingly, as shown in Fig. 17, in this video camera, as indicated by the arrow A, an AV file is created from a moving picture file based on successive pictures P1, P2, and so on sequentially obtained during photography, and this AV file is recorded into the recording medium 33. Further, as indicated by the arrow B, the representative image data JPEG is created by selecting the corresponding picture from the successive pictures P1, P2, and so on, and this representative image data JPEG is stored into each of the media data box and movie box together with various other information to thereby create the meta information file.

When file roll reproduction is designated by the user, the control section 3 reproduces the representative image data JPEG from the meta information file for display as indicated by the arrow C in the same manner as described above with reference to Fig. 8. Further, as indicated by the arrow D, the control section 3 reproduces the corresponding video stream for display. When the user selects any one of representative images at this time, as indicated by the arrows E and F, the control section 3 detects the reproduction position in the corresponding video stream from the record in the sample table box of this representative image, and switches the display by switching the reproduction position in the video stream.

At this time, without using the "time offset" stored in the edit list box of the meta information file, the control section 3 adds up the reproduction time recorded in the "duration" from the leading representative image to the representative image immediately previous to the representative image selected by the user to thereby calculate the summed time, and locates the reproduction start position in the video stream by using the reproduction time information based on this summed time and reproduces the video stream. The control section 3 can thus easily and quickly switch the reproduction or display of the video stream even when the user selects various representative images.

When the user specifies a representative image by switching the reproduction or display of the video stream on the basis of the representative mage and designates edit point setting, the control section 3 sets the edit point in the video stream in correspondence with the representative image specified by the user. Further, when the editing of video stream on the basis of the edit point set in this way is designated, the control section 3 processes the video stream on a per GOP basis to create the AV file of the editing result. It should be noted that in this case, editing may be performed with an external apparatus by partially reproducing the video stream in accordance with the edit point setting and outputting this to the external apparatus. Accordingly, the control section 3 performs destructive editing of the AV file.

In this case as well, in the same manner as in the case of reproducing video stream through the selection of a representative image by the user, on the In point side, the control section 3 passes the summed time of the time periods recorded in the "duration" to the reproduction side of the video stream, thereby performing setting such that reproduction is started from the picture corresponding to the representative image specified by the user.

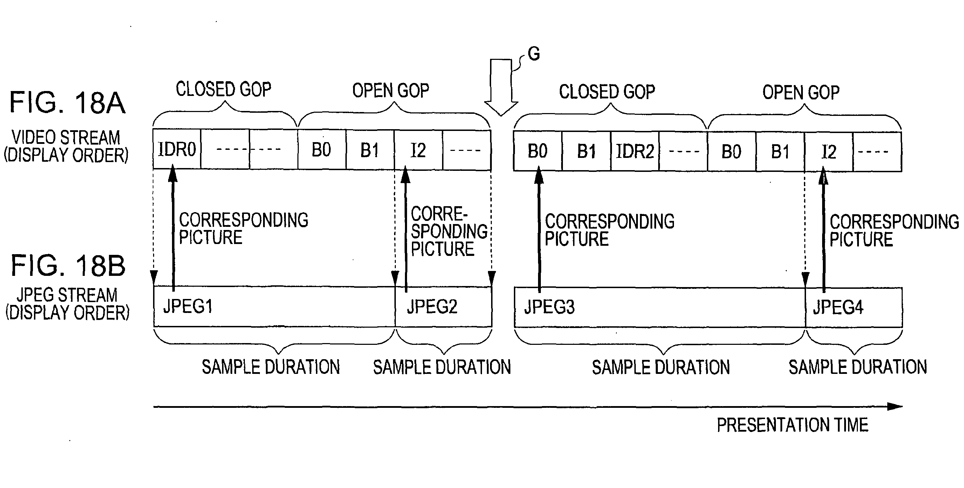

That is, as shown in Figs. 18A and 18B, when the user selects a representative image of the code JPEG3 and sets the In point, if the GOP corresponding to this representative image is a closed GOP, the control section 3 adds up the durations of the two immediately previous representative images JPEG1 and JPEG2, thereby detecting the reproduction start position of the B picture B0 corresponding to the representative image JPEG3. In this case, since the corresponding GOP is a closed GOP, on the basis of this summed time information, the video stream is cut out from the B picture B0 that is the leading picture of the corresponding GOP as indicated by the arrow G, thereby creating the AV file of the editing result. Here, in the case where destructive editing is performed on a per GOP basis, the leading I or IDR picture in the decoding order of the GOP serves as the edit point. Accordingly, if a representative image designated by the user is one that is created from the I or IDR picture, since the picture corresponding to this representative image is the leading picture in the decoding order, the video stream is split at the leading position in the decoding order. On the other hand, if a representative image designated by the user is one that is created from the B picture, the video stream is split from the IDR picture to which this B picture refers and which is located at the leading position in the decoding order. Thus, in this case, the video stream is split from the picture IDR 2 at the leading position in the decoding order. Accordingly, in the example shown in Figs. 18A and 18B, the AV file of the editing result can be created so as to allow reproduction to be performed from the picture B0 corresponding to the representative image designated by the user.

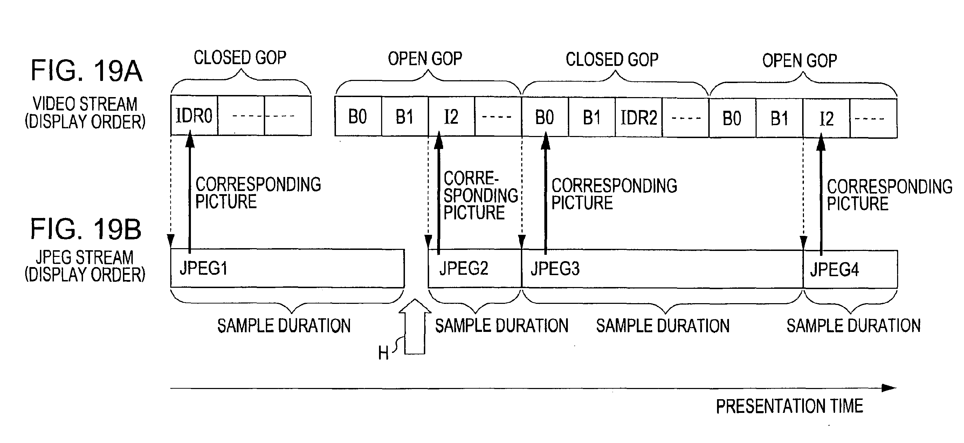

On the other hand, as shown in Figs. 19A and 19B, when the user selects a representative image of the code JPEG2 and sets the In point, if the GOP corresponding to this representative image is an open GOP, the control section 3 detects the reproduction start position of the I picture I2 corresponding to the representative image JPEG2 on the basis of the duration of the immediately previous representative image JPEG1. In this case, since the corresponding GOP is an open GOP, on the basis of this summed time information, the video stream is cut out from the B picture B0 that is the leading picture of the corresponding GOP as indicated by the arrow H, thereby creating the AV file of the editing result. It should be noted that when destructive editing is performed on a per GOP basis, the structure of the open GOP becomes one in which IDR2 in Fig. 15A is changed to I2. Since I2 is at the leading position in the decoding order, splitting is performed from 12 in the same manner as described above. Here, in this case, since the pictures to which the two leading B pictures B0 and B1 thus cut out refer are in the GOP located immediately previous to these pictures before they are cut out, no decoding is performed after the cutting out. Accordingly, in this case as well, the AV file of the imaging result can be created so as to allow reproduction to be performed from the I picture I2 corresponding to the representative image designated by the user. The same applies to the case where a file on which non-destructive editing has been performed is reproduced with another apparatus.

On the Out point side, the AV file is created by cutting out the video stream in such a manner that the GOP containing the picture from which the representative image designated by the user is created becomes the last GOP. It should be noted that in the video camera according to this embodiment, there may be cases where after an imaging result is recorded as an AV file, a meta information file is created by the designation of the user, and is further subjected to editing. In this case as well, in the same manner as described above, this video camera switches the picture for creating a representative image in accordance with the kind of the GOP of a moving picture file. In this case, the determination as to whether a GOP constituting video stream is an open GOP or a closed GOP is made as follows. That is, if the codec for the video stream is MPEG2, since a flag indicating the structure of a GOP exists within the video stream for each individual GOP, this flag is set to 1 when performing recording with a closed GOP, and at the time of creating a meta information file, this flag is evaluated, and the creation of the meta information file is executed. Further, if the codec for the video stream is MPEG (Moving Picture Experts Group)-4AVC (Advanced Video Coding), Sequence Parameter Set NAL Unit recording the profile, encoding mode, and the like is recorded for each individual GOP. At the time of reproduction, the Sequence Parameter Set NAL Unit is detected, and if the leading picture of the GOP thereof is IDR-I Picture, it is determined that the GOP is a closed GOP, and if the leading picture is an I picture that is not IDR, it is determined that the GOP is an open GOP.

According to this embodiment, the picture for creating a representative image is switched in accordance with the kind of the GOP of a moving picture file corresponding to the representative image. More specifically, if the GOP of the corresponding moving picture file is a closed GOP, the representative image is created from the leading picture in the display order, and if the GOP of the corresponding moving picture file is an open GOP, the representative image is created from the leading I picture. Accordingly, when performing film roll reproduction, the video stream is edited with the representative image taken as a reference, thereby preventing the consistency between the representative image and the video stream from being jeopardized when reproducing the editing result with another apparatus.

### Embodiment 7

While the above-described embodiments are directed to the case where video data is subjected to data compression to create an AV file, this should not be construed restrictively. The present invention is applicable to a wide variety of cases such as when creating an AV file from video data on which no data compression has been performed.

Further, while the above-described embodiments are directed to the case where the present invention is applied to a video camera, this should not be construed restrictively. The present invention is applicable to a wide variety of video equipment.

It should be understood by those skilled in the art that various modifications, combinations, sub-combinations and alterations may occur depending on design requirements and other factors insofar as they are within the scope of the appended claims or the equivalents thereof.

## Claims

1. A recording apparatus comprising:
moving-picture recording control means for recording a moving picture as a moving picture file into a recording medium;
representative image creating means for creating a representative image representing a predetermined group of frame images forming the moving picture; and
representative-image recording control means for recording the representative image as a representative image file into the recording medium,
wherein the representative-image recording control means
creates the representative image file according to a file structure having a representative image storing section that stores the representative image, and a control information storing section that stores control information hierarchically in accordance with the kind of the control information, the control information being used for controlling reproduction of the representative image stored in the representative image storing section,
stores, at a first layer of the control information storing section, information indicating that information stored in the control information storing section is control information for controlling the representative image,
stores, at a second layer lower than the first layer, information indicating modification date and time of the moving picture file, and
stores, at a third layer lower than the second layer, the control information for performing reproduction control with the representative image as a minimum reproduction unit.

2. The recording apparatus according to Claim 1,
wherein:
the representative-image recording control means stores, at the same layer as the first layer, information for specifying the moving picture.

3. The recording apparatus according to Claim 1,
wherein:
the representative-image recording control means further records modification date and time information of the moving picture file at a layer different from the second layer in the control information storing section.

4. The recording apparatus according to Claim 1,
wherein:
the representative-image recording control means sets a file name of the representative image file excluding an extension to be the same as a file name of the moving picture file excluding an extension.

5. The recording apparatus according to Claim 1,
wherein:
the representative-image recording control means stores the representative image into the representative image storing section in a fixed data size by performing data compression on the representative image.

6. The recording apparatus according to Claim 1,
wherein:
the predetermined group includes one or a plurality of GOPs; and
the representative-image recording control means switches a picture for creating the representative image, in accordance with the kind of a GOP in the moving picture file to which the representative image corresponds.

7. The recording apparatus according to Claim 6,
wherein:
when the corresponding GOP in the moving picture file is a closed GOP, the picture is switched to the leading picture in the display order; and
when the corresponding GOP in the moving picture file is an open GOP, the picture is switched to the leading I picture.

8. A recording method comprising:
a moving-picture recording control step of recording a moving picture as a moving picture file into a recording medium;
a representative image creating step of creating a representative image representing a predetermined group of frame images forming the moving picture; and
a representative-image recording control step of recording the representative image as a representative image file into the recording medium,
wherein the representative-image recording control step includes
creating the representative image file according to a file structure having a representative image storing section that stores the representative image, and a control information storing section that stores control information hierarchically in accordance with the kind of the control information, the control information being used for controlling reproduction of the representative image stored in the representative image storing section,
storing, at a first layer of the control information storing section, information indicating that information stored in the control information storing section is control information for controlling the representative image,
storing, at a second layer lower than the first layer, information indicating modification date and time of the moving picture file, and
storing, at a third layer lower than the second layer, the control information for performing reproduction control with the representative image as a minimum reproduction unit.

9. A program for a recording method in which a moving picture is recorded into a recording medium by execution of computing means, comprising:
a moving-picture recording control step of recording the moving picture as a moving picture file into the recording medium;
a representative image creating step of creating a representative image representing a predetermined group of frame images forming the moving picture; and
a representative-image recording control step of recording the representative image as a representative image file into the recording medium,
wherein the representative-image recording control step includes
creating the representative image file according to a file structure having a representative image storing section that stores the representative image, and a control information storing section that stores control information hierarchically in accordance with the kind of the control information, the control information being used for controlling reproduction of the representative image stored in the representative image storing section,
storing, at a first layer of the control information storing section, information indicating that information stored in the control information storing section is control information for controlling the representative image,
storing, at a second layer lower than the first layer, information indicating modification date and time of the moving picture file, and
storing, at a third layer lower than the second layer, the control information for performing reproduction control with the representative image as a minimum reproduction unit.

10. A recording medium recording a program for a recording method in which a moving picture is recorded into the recording medium by execution of computing means, the program for the recording method including:
a moving-picture recording control step of recording the moving picture as a moving picture file into the recording medium;
a representative image creating step of creating a representative image representing a predetermined group of frame images forming the moving picture; and
a representative-image recording control step of recording the representative image as a representative image file into the recording medium,
wherein the representative-image recording control step includes
creating the representative image file according to a file structure having a representative image storing section that stores the representative image, and a control information storing section that stores control information hierarchically in accordance with the kind of the control information, the control information being used for controlling reproduction of the representative image stored in the representative image storing section,
storing, at a first layer of the control information storing section, information indicating that information stored in the control information storing section is control information for controlling the representative image,
storing, at a second layer lower than the first layer, information indicating modification date and time of the moving picture file, and
storing, at a third layer lower than the second layer, the control information for performing reproduction control with the representative image as a minimum reproduction unit.

11. A reproducing apparatus which reproduces a moving picture file and a representative image file that are recorded in a recording medium,
wherein the representative image file
includes a representative image storing section that stores a representative image representing a predetermined group of frame images forming the moving picture file, and a control information storing section that stores control information hierarchically in accordance with the kind of the control information, the control information being used for controlling reproduction of the representative image stored in the representative image storing section,
stores, at a first layer of the control information storing section, information indicating that information stored in the control information storing section is control information for controlling the representative image,
stores, at a second layer lower than the first layer, information indicating modification date and time of the moving picture file, and
stores, at a third layer lower than the second layer, the control information for performing reproduction control with the representative image as a minimum reproduction unit,
wherein the reproducing apparatus comprises
a data reproducing section that reproduces the moving picture file and the representative image file recorded in the recording medium,
a display section that displays a moving picture of the moving picture file and a representative image of the representative image file reproduced by the data reproducing section, and
a control section that controls display of the display section by processing data reproduced by the data reproducing section, and
wherein the control section
displays in list form on the display section a plurality of the representative images recorded in the recording medium, on the basis of control information for the representative image, and switches between the representative images displayed in list form in response to an operation of a user,
accepts a selection of a representative image from among the representative images displayed in list form, and
displays on the display section the frame images corresponding to the selected representative image, on the basis of control information for the representative image.

12. A reproduction method for reproducing a moving picture file and a representative image file that are recorded in a recording medium,
wherein the representative image file
includes a representative image storing section that stores a representative image representing a predetermined group of frame images forming the moving picture file, and a control information storing section that stores control information hierarchically in accordance with the kind of the control information, the control information being used for controlling reproduction of the representative image stored in the representative image storing section,
stores, at a first layer of the control information storing section, information indicating that information stored in the control information storing section is control information for controlling the representative image,
stores, at a second layer lower than the first layer, information indicating modification date and time of the moving picture file, and
stores, at a third layer lower than the second layer, the control information for performing reproduction control with the representative image as a minimum reproduction unit,
wherein the reproduction method comprises
a data reproducing step of reproducing the moving picture file and the representative image file recorded in the recording medium,
a displaying step of displaying a moving picture of the moving picture file and a representative image of the representative image file reproduced by the data reproducing step, and
a controlling step of controlling display in the displaying step by processing data reproduced by the data reproducing step, and
wherein the controlling step includes
displaying in list form in the displaying step a plurality of the representative images recorded in the recording medium, on the basis of control information for the representative image, and switches between the representative images displayed in list form in response to an operation of a user,
accepting a selection of a representative image from among the representative images displayed in list form, and
displaying in the displaying step the frame images corresponding to the selected representative image, on the basis of control information for the representative image.

13. A program for a reproduction method in which a moving picture file and a representative image file that are recorded in a recording medium are reproduced by execution of computing means,
wherein the representative image file
includes a representative image storing section that stores a representative image representing a predetermined group of frame images forming the moving picture file, and a control information storing section that stores control information hierarchically in accordance with the kind of the control information, the control information being used for controlling reproduction of the representative image stored in the representative image storing section,
stores, at a first layer of the control information storing section, information indicating that information stored in the control information storing section is control information for controlling the representative image,
stores, at a second layer lower than the first layer, information indicating modification date and time of the moving picture file, and
stores, at a third layer lower than the second layer, the control information for performing reproduction control with the representative image as a minimum reproduction unit,
wherein the reproduction method includes
a data reproducing step of reproducing the moving picture file and the representative image file recorded in the recording medium,
a displaying step of displaying a moving picture of the moving picture file and a representative image of the representative image file reproduced by the data reproducing step, and
a controlling step of controlling display in the displaying step by processing data reproduced by the data reproducing step, and
wherein the controlling step includes
displaying in list form in the displaying step a plurality of the representative images recorded in the recording medium, on the basis of control information for the representative image, and switches between the representative images displayed in list form in response to an operation of a user,
accepting a selection of a representative image from among the representative images displayed in list form, and
displaying in the displaying step the frame images corresponding to the selected representative image, on the basis of control information for the representative image.

14. A recording medium recording a program for a reproduction method in which a moving picture file and a representative image file that are recorded in the recording medium are reproduced by execution of computing means,
wherein the representative image file
includes a representative image storing section that stores a representative image representing a predetermined group of frame images forming the moving picture file, and a control information storing section that stores control information hierarchically in accordance with the kind of the control information, the control information being used for controlling reproduction of the representative image stored in the representative image storing section,
stores, at a first layer of the control information storing section, information indicating that information stored in the control information storing section is control information for controlling the representative image,
stores, at a second layer lower than the first layer, information indicating modification date and time of the moving picture file, and
stores, at a third layer lower than the second layer, the control information for performing reproduction control with the representative image as a minimum reproduction unit,
wherein the reproduction method includes
a data reproducing step of reproducing the moving picture file and the representative image file recorded in the recording medium,
a displaying step of displaying a moving picture of the moving picture file and a representative image of the representative image file reproduced by the data reproducing step, and
a controlling step of controlling display in the displaying step by processing data reproduced by the data reproducing step, and
wherein the controlling step includes
displaying in list form in the displaying step a plurality of the representative images recorded in the recording medium, on the basis of control information for the representative image, and switches between the representative images displayed in list form in response to an operation of a user,
accepting a selection of a representative image from among the representative images displayed in list form, and
displaying in the displaying step the frame images corresponding to the selected representative image, on the basis of control information for the representative image.

15. A recording apparatus comprising:
a moving-picture recording control device configured to record a moving picture as a moving picture file into a recording medium;
a representative image creating device configured to create a representative image representing a predetermined group of frame images forming the moving picture; and
a representative-image recording control device configured to record the representative image as a representative image file into the recording medium,
wherein the representative-image recording control device
creates the representative image file according to a file structure having a representative image storing section that stores the representative image, and a control information storing section that stores control information hierarchically in accordance with the kind of the control information, the control information being used for controlling reproduction of the representative image stored in the representative image storing section,
stores, at a first layer of the control information storing section, information indicating that information stored in the control information storing section is control information for controlling the representative image,
stores, at a second layer lower than the first layer, information indicating modification date and time of the moving picture file, and
stores, at a third layer lower than the second layer, the control information for performing reproduction control with the representative image as a minimum reproduction unit.
